# EUROPEAN PATENT APPLICATION

(11) **EP 4 135 411 A1**
(43) Date of publication of application: **15.02.2023**
(21) Application number: 21803462.7
(22) Date of filing: 10.03.2021
(51) Int. Cl.: H04W 48/16

(54) **COMMUNICATION METHOD AND COMMUNICATION APPARATUS**

(30) Priority: 09.05.2020 CN 202010385697
(71) Applicant: Huawei Technologies Co., Ltd., Longgang Shenzhen, Guangdong 518129 (CN)
(72) Inventor: ZHU, Qianghua, Shenzhen, Guangdong 518129 (CN); WU, Wenfu, Shenzhen, Guangdong 518129 (CN)
(74) Representative: Goddar, Heinz J.
(86) International application number: PCT/CN2021/079992
(87) International publication number: WO 2021/227627

(57) **Abstract**

This application provides a communication method and a communication apparatus. The method includes: A first network device receives a first message. The first message includes an identifier of a terminal device. The first network device determines first network selection information. The first network selection information includes at least one of information about a standalone non-public network SNPN that allows the terminal device to access and information about whether the terminal device is allowed to access a public land mobile network PLMN. The first network device sends a second message. The second message includes the first network selection information. According to a technical solution provided in this application, the terminal device is enabled to obtain SNPN network selection information of the terminal device from the PLMN or the SNPN, so that when being located in coverage of different networks, the terminal device can select the SNPN or the PLMN by using the SNPN network selection information, and access the SNPN.

## Description

This application claims priority to Chinese Patent Application No. 202010385697.4, filed with the China National Intellectual Property Administration on May 9, 2020 and entitled "COMMUNICATION METHOD AND COMMUNICATION APPARATUS", which is incorporated herein by reference in its entirety.

### TECHNICAL FIELD

This application relates to the communications field, and more specifically, to a communication method and a communication apparatus.

### BACKGROUND

A non-public network (non-public network, NPN) is a non-public 5G network. A standalone non-public network (standalone NPN, SNPN) is independently deployed, and may be implemented without depending on a network function of a public land mobile network (public land mobile network, PLMN). The SNPN network may support a terminal in accessing the SNPN in an "external subscription" manner. To be specific, user subscription of the terminal is owned by an external entity (for example, a mobile network operator (mobile network operator, MNO)) independent of the SNPN network, and the SNPN network allows the terminal of this type to access the SNPN by using the external subscription.

So far, if a terminal device (user equipment, UE) needs to access the SNPN in the external subscription manner, the terminal device needs to be located in coverage of the SNPN, and cannot be covered by the PLMN. However, during actual application, the terminal device may be located in common coverage of the SNPN and the PLMN, or the terminal device may be located only in coverage of the PLMN. In the two cases, there is no good method for the terminal device to access the SNPN.

### SUMMARY

This application provides a communication method, to enable a terminal device to obtain SNPN network selection information of the terminal device from a PLMN or an SNPN, so that when being located in coverage of different networks, the terminal device can select the SNPN or the PLMN by using the SNPN network selection information, and access the SNPN.

According to a first aspect, a communication method is provided. The method includes: A first network device receives a first message. The first message includes an identifier of a terminal device. The first network device determines first network selection information. The first network selection information includes at least one of information about a standalone non-public network SNPN that allows the terminal device to access and information about whether the terminal device is allowed to access a public land mobile network PLMN. The first network device sends a second message. The second message includes the first network selection information.

The SNPN network selection information is provided for the terminal device, so that when being located in coverage of different networks, the terminal device can select the SNPN or the PLMN by using the SNPN network selection information, and access the SNPN.

With reference to the first aspect, in some implementations of the first aspect, that the first network device determines first network selection information includes: The first network device determines the first network selection information based on at least one of subscription data, policy data, and a local configuration of the terminal device.

With reference to the first aspect, in some implementations of the first aspect, that the first network device determines the first network selection information based on at least one of subscription data, policy data, and a local configuration of the terminal device further includes: If the subscription data and the policy data of the terminal device coexist, the first network device preferentially determines the first network selection information based on the policy data of the terminal device.

With reference to the first aspect, in some implementations of the first aspect, the first network device is an access and mobility management function network element AMF, and before the first network device determines first network selection information, the method further includes: The first network device sends a third message to a unified data management network element UDM. The third message is used to obtain the subscription data of the terminal device, and the subscription data includes at least one of the information about the SNPN that allows the terminal device to access and the information about whether the terminal device is allowed to access a PLMN. The first network device receives a fourth message sent by the UDM. The fourth message includes the subscription data of the terminal device.

With reference to the first aspect, in some implementations of the first aspect, the first network selection information is the subscription data of the terminal device.

With reference to the first aspect, in some implementations of the first aspect, the first network device is an AMF, and before the first network device determines first network selection information, the method further includes: The first network device sends a fifth message to a policy control function network element PCF. The fifth message is used to obtain the policy data of the terminal device, and the policy data includes at least one of the information about the SNPN that allows the terminal device to access and the information about whether the terminal device is allowed to access a PLMN. The first network device receives a sixth message sent by the PCF. The sixth message includes the policy data of the terminal device.

With reference to the first aspect, in some implementations of the first aspect, the first network selection information is the policy data of the terminal device.

With reference to the first aspect, in some implementations of the first aspect, the information about the SNPN that allows the terminal device to access includes an identifier of the SNPN that allows the terminal device to access.

The information including the identifier of the SNPN that allows the terminal device to access is sent to the terminal device, so that the terminal device may select, based on the network selection information, the SNPN to access.

With reference to the first aspect, in some implementations of the first aspect, the information about the SNPN that allows the terminal device to access further includes first priority information, indicating a priority sequence of the SNPN that allows the terminal device to access.

The priority information of the SNPN is specified, so that when being in coverage of different SNPNs or coverage of both the SNPN and the PLMN, the terminal device can select a most appropriate SNPN to access.

With reference to the first aspect, in some implementations of the first aspect, the information about whether the terminal device is allowed to access a PLMN includes an identifier of a PLMN that does not allow the terminal device to access and/or indication information indicating that the terminal device is not allowed to access a PLMN.

The identifier of the PLMN that does not allow the terminal device to access and/or the indication information indicating that the terminal device is not allowed to access a PLMN are/is sent to the terminal device, so that when the terminal device is covered by both the PLMN and the SNPN, the terminal device can select the SNPN to access, or when the terminal device is covered by only the PLMN, the terminal device does not select the PLMN.

With reference to the first aspect, in some implementations of the first aspect, the local configuration includes information indicating that the terminal device is not allowed to access a PLMN and/or information indicating that the terminal is capable of accessing only the SNPN.

In a local configuration manner, when the terminal device attempts to access the PLMN, the network device may reject the terminal device from accessing the PLMN, and indicate, by determining the first network selection information, the terminal device to access the SNPN.

With reference to the first aspect, in some implementations of the first aspect, before the first network device sends a second message, the method further includes: The first network element marks the terminal device as being in a roaming state. A serving network of the terminal device is a PLMN, and a home network of the terminal device is an SNPN.

The terminal device that is actually in a non-roaming state is marked as being in the roaming state, so that the terminal device can access the SNPN by using the PLMN.

With reference to the first aspect, in some implementations of the first aspect, that the first network element marks the terminal device as being in a roaming state includes: The first network element marks, based on the local configuration or the subscription data of the terminal device, the terminal device as being in the roaming state. The local configuration includes an identifier that is of a terminal device in a specific range and that is allocated to the SNPN for use, or first indication information that indicates the first network element to mark, when an identifier of the terminal device includes an identifier of a specific SNPN, the terminal device as being in the roaming state. The subscription data of the terminal device includes second indication information, and the second indication information indicates that if the terminal device performs access from a PLMN, the terminal device enters the roaming state, or the second indication information indicates that the home network of the terminal device is an SNPN.

With reference to the first aspect, in some implementations of the first aspect, the method further includes: The first network device receives a seventh message sent by the terminal device. The seventh message is used to request to establish a first protocol data unit PDU session of a data network name DNN/single network slice selection assistance information S-NSSAI. The first network element establishes the first PDU session in a non-roaming manner when the subscription of the terminal device indicates that the first PDU session is home routed HR roaming, or establishes the first PDU session in an HR roaming manner when the subscription of the terminal device indicates that the first PDU session is local breakout LBO roaming.

The manner of indicating to establish the PDU session is used, so that the terminal device can implement logical conversion in an actual non-roaming case, access the SNPN by using the PLMN, and visit a service of the PLMN or the SNPN.

With reference to the first aspect, in some implementations of the first aspect, the information about whether the terminal device is allowed to access a PLMN includes an identifier of a PLMN that allows the terminal device to access and second priority information. The second priority information indicates a priority sequence of the PLMN that allows the terminal device to access, and a priority indicated by the second priority information is lower than a priority indicated by the first priority information.

The network selection information including the identifier of the PLMN that allows the terminal device to access and the second priority information is sent, so that the terminal device can select the PLMN when the terminal device is not covered by the SNPN, access the SNPN by using the PLMN, and preferentially access the SNPN based on the priority information when the terminal device is located in coverage of both the PLMN and the SNPN.

With reference to the first aspect, in some implementations of the first aspect, the first network device belongs to an SNPN, the first network device sends the second message to a third network device, and the third network device belongs to a PLMN.

Optionally, the first network device may belong to the SNPN, or may belong to the PLMN.

According to a second aspect, a communication method is provided. The method includes: A second network device receives a first message. The first message includes an identifier of a terminal device. The second network device sends a second message. The second message includes at least one of information about a standalone non-public network SNPN that allows the terminal device to access and information about whether the terminal device is allowed to access a public land mobile network PLMN.

The related SNPN network selection information is provided, so that when being located in coverage of different networks, the terminal device can select the SNPN or the PLMN by using the related SNPN network selection information, and access the SNPN.

With reference to the second aspect, in some implementations of the second aspect, the second network device is a unified data management network element UDM, the second message is subscription data of the terminal device, and the subscription data includes at least one of the information about the SNPN that allows the terminal device to access and the information about whether the terminal device is allowed to access a PLMN.

With reference to the second aspect, in some implementations of the second aspect, the second network device is a policy control function network element PCF, the second message is policy data of the terminal device, and the policy data includes at least one of the information about the SNPN that allows the terminal device to access and the information about whether the terminal device is allowed to access a PLMN.

With reference to the second aspect, in some implementations of the second aspect, the information about the SNPN that allows the terminal device to access includes at least one of the following information: indication information indicating that access from only the SNPN is allowed; an identifier of the SNPN that allows access; or first priority information, indicating a priority of the SNPN that allows access.

The information including the SNPN that allows access is provided for the terminal device, so that the terminal device can select the SNPN to access.

With reference to the second aspect, in some implementations of the second aspect, the information about whether the terminal device is allowed to access a PLMN includes at least one of the following information: indication information indicating that access from a PLMN is not allowed; or an identifier of a PLMN that does not allow access.

Information about the PLMN that does not allow access is provided for the terminal device, so that the terminal device does not access the PLMN when the terminal device is covered by both the PLMN and the SNPN or when the terminal device is located in coverage of only the PLMN.

With reference to the second aspect, in some implementations of the second aspect, when the information about the SNPN that allows the terminal device to access includes an identifier of the SNPN that allows access and first priority information, the information about whether the terminal device is allowed to access a PLMN includes at least one of the following information: indication information indicating that access to a PLMN is allowed; an identifier of a PLMN that allows access; or second priority information, indicating a priority of the PLMN that allows access. The priority indicated by the second priority information is lower than a priority indicated by the first priority information.

Information about the PLMN that allows access is provided for the terminal device, so that the terminal device can access the SNPN by using the PLMN, or when the terminal device is covered by both the PLMN and the SNPN, the terminal device can preferentially select the SNPN to access.

According to a third aspect, a communication method is provided. The method includes: A terminal device sends a first message. The first message includes an identifier of the terminal device. The terminal device receives a second message. The second message includes first network selection information, and the first network selection information includes at least one of information about a standalone non-public network SNPN that allows the terminal device to access and information about whether the terminal device is allowed to access a public land mobile network PLMN.

The SNPN network selection information is obtained, so that when being located in coverage of different networks, the terminal device can select the SNPN or the PLMN by using the SNPN network selection information, and access the SNPN.

With reference to the third aspect, in some implementations of the third aspect, the information about the SNPN that allows the terminal device to access includes an identifier of the SNPN that allows the terminal device to access.

The information including the identifier of the SNPN that allows the terminal device to access is received, so that the terminal device may select, based on the network selection information, the SNPN to access.

With reference to the third aspect, in some implementations of the third aspect, the information about the SNPN that allows the terminal device to access further includes first priority information, indicating a priority sequence of the SNPN that allows the terminal device to access.

The priority information of the SNPN is specified, so that when being in coverage of different SNPNs or coverage of both the SNPN and the PLMN, the terminal device can select a most appropriate SNPN to access.

With reference to the third aspect, in some implementations of the third aspect, the information about whether the terminal device is allowed to access a PLMN includes an identifier of a PLMN that does not allow the terminal device to access and/or indication information indicating that the terminal device is not allowed to access a PLMN.

The identifier of the PLMN that does not allow the terminal device to access and/or the indication information indicating that the terminal device is not allowed to access a PLMN are/is received, so that when the terminal device is covered by both the PLMN and the SNPN, the terminal device can select the SNPN to access, or when the terminal device is covered by only the PLMN, the terminal device does not select the PLMN.

With reference to the third aspect, in some implementations of the third aspect, the method further includes: The terminal device forbids a PLMN network selection function based on the first network selection information.

Based on the SNPN network selection information, the terminal device may correspondingly forbid the PLMN network selection function, so that the terminal device does not select the PLMN when subsequently searching for a network to access.

With reference to the third aspect, in some implementations of the third aspect, the information about whether the terminal device is allowed to access a PLMN includes an identifier of a PLMN that allows the terminal device to access and second priority information. The second priority information indicates a priority sequence of the PLMN that allows the terminal device to access, and a priority of the second priority information is lower than a priority of the first priority information.

The identifier of the PLMN that allows the terminal device to access and the network selection information of the second priority information are received, so that when the terminal device is not covered by the SNPN, the terminal device can access the SNPN by using the PLMN, and preferentially access the SNPN based on the priority information when the terminal device is located in coverage of both the PLMN and the SNPN.

With reference to the third aspect, in some implementations of the third aspect, the method further includes: The terminal device updates a network selection configuration of the terminal device based on the first network selection information.

The SNPN network selection information sent by the network device is received and the configuration is updated, so that the terminal device can determine and select a to-be-accessed SNPN based on updated information.

According to a fourth aspect, a communication apparatus is provided. The apparatus includes a first receiving module, configured to receive a first message, where the first message includes an identifier of a terminal device; a first processing module, configured to determine first network selection information, where the first network selection information includes at least one of information about a standalone non-public network SNPN that allows the terminal device to access and information about whether the terminal device is allowed to access a public land mobile network PLMN; and a first sending module, configured to send a second message, where the second message includes the first network selection information.

With reference to the fourth aspect, in some implementations of the fourth aspect, the processing module is specifically configured to determine the first network selection information based on at least one of subscription data, policy data, and a local configuration of the terminal device.

With reference to the fourth aspect, in some implementations of the fourth aspect, the processing module is further configured to: if the subscription data and the policy data of the terminal device coexist, preferentially determine the first network selection information based on the policy data of the terminal device.

With reference to the fourth aspect, in some implementations of the fourth aspect, the apparatus is an access and mobility management function network element AMF, and the first sending module is further configured to send a third message to a unified data management network element UDM. The third message is used to obtain the subscription data of the terminal device. The subscription data includes at least one of the information about the SNPN that allows the terminal device to access and the information about whether the terminal device is allowed to access a PLMN. The first receiving module is further configured to receive a fourth message sent by the UDM. The fourth message includes the subscription data of the terminal device.

With reference to the fourth aspect, in some implementations of the fourth aspect, the first network selection information is the subscription data of the terminal device.

With reference to the fourth aspect, in some implementations of the fourth aspect, the first sending module is further configured to send a fifth message to a policy control function network element PCF. The fifth message is used to obtain the policy data of the terminal device. The policy data includes at least one of the information about the SNPN that allows the terminal device to access and the information about whether the terminal device is allowed to access a PLMN. The first receiving module is further configured to receive a sixth message sent by the PCF. The sixth message includes the policy data of the terminal device.

With reference to the fourth aspect, in some implementations of the fourth aspect, the first network selection information is the policy data of the terminal device.

With reference to the fourth aspect, in some implementations of the fourth aspect, the information about the SNPN that allows the terminal device to access includes an identifier of the SNPN that allows the terminal device to access.

With reference to the fourth aspect, in some implementations of the fourth aspect, the information about the SNPN that allows the terminal device to access further includes first priority information, indicating a priority sequence of the SNPN that allows the terminal device to access.

With reference to the fourth aspect, in some implementations of the fourth aspect, the information about whether the terminal device is allowed to access a PLMN includes an identifier of a PLMN that does not allow the terminal device to access and/or indication information indicating that the terminal device is not allowed to access a PLMN.

With reference to the fourth aspect, in some implementations of the fourth aspect, the local configuration includes information indicating that the terminal device is not allowed to access a PLMN and/or information indicating that the terminal is capable of accessing only the SNPN.

With reference to the fourth aspect, in some implementations of the fourth aspect, the processing module is further configured to mark the terminal device as being in a roaming state. A serving network of the terminal device is a PLMN, and a home network of the terminal device is an SNPN.

With reference to the fourth aspect, in some implementations of the fourth aspect, the processing module is specifically configured to mark, based on the local configuration or the subscription data of the terminal device, the terminal device as being in the roaming state. The local configuration includes an identifier that is of a terminal device in a specific range and that is allocated to the SNPN for use, or first indication information that indicates the first network element to mark, when an identifier of the terminal device includes an identifier of a specific SNPN, the terminal device as being in the roaming state. The subscription data of the terminal device includes second indication information, and the second indication information indicates that if the terminal device performs access from a PLMN, the terminal device enters the roaming state, or the second indication information indicates that the home network of the terminal device is an SNPN.

With reference to the fourth aspect, in some implementations of the fourth aspect, the first receiving module is further configured to receive a seventh message sent by the terminal device. The seventh message is used to request to establish a first protocol data unit PDU session of a data network name DNN/single network slice selection assistance information S-NSSAI. The processing module is further configured to establish the first PDU session in a non-roaming manner when the subscription of the terminal device indicates that the first PDU session is home routed HR roaming, or establish the first PDU session in an HR roaming manner when the subscription of the terminal device indicates that the first PDU session is local breakout LBO roaming.

With reference to the fourth aspect, in some implementations of the fourth aspect, the information about whether the terminal device is allowed to access a PLMN includes an identifier of a PLMN that allows the terminal device to access and second priority information. The second priority information indicates a priority sequence of the PLMN that allows the terminal device to access, and a priority indicated by the second priority information is lower than a priority indicated by the first priority information.

With reference to the fourth aspect, in some implementations of the fourth aspect, the apparatus belongs to an SNPN, the apparatus sends the second message to a third network device, and the third network device belongs to a PLMN.

According to a fifth aspect, a communication apparatus is provided. The apparatus includes a second receiving module, configured to receive a first message, where the first message includes an identifier of a terminal device; and a second sending module, configured to send a second message, where the second message includes at least one of information about an SNPN that allows the terminal device to access and information about whether the terminal device is allowed to access a PLMN.

With reference to the fifth aspect, in some implementations of the fifth aspect, the apparatus is a unified data management network element UDM, the second message is subscription data of the terminal device, and the subscription data includes at least one of the information about the SNPN that allows the terminal device to access and the information about whether the terminal device is allowed to access a PLMN.

With reference to the fifth aspect, in some implementations of the fifth aspect, the apparatus is a PCF, the second message is policy data of the terminal device, and the policy data includes at least one of the information about the SNPN that allows the terminal device to access and the information about whether the terminal device is allowed to access a PLMN.

With reference to the fifth aspect, in some implementations of the fifth aspect, the information about the SNPN that allows the terminal device to access includes at least one of the following information: indication information indicating that access from only the SNPN is allowed; an identifier of the SNPN that allows access; or first priority information, indicating a priority of the SNPN that allows access.

With reference to the fifth aspect, in some implementations of the fifth aspect, the information about whether the terminal device is allowed to access a PLMN includes at least one of the following information: indication information indicating that access from a PLMN is not allowed; or an identifier of a PLMN that does not allow access.

With reference to the fifth aspect, in some implementations of the fifth aspect, when the information about the SNPN that allows the terminal device to access includes an identifier of the SNPN that allows access and first priority information, the information about whether the terminal device is allowed to access a PLMN includes at least one of the following information: indication information indicating that access to a PLMN is allowed; an identifier of the PLMN that allows access; or second priority information, indicating a priority of the PLMN that allows access. The priority indicated by the second priority information is lower than a priority indicated by the first priority information.

According to a sixth aspect, a communication apparatus is provided. The apparatus includes a third sending module, configured to send a first message, where the first message includes an identifier of the apparatus; and a third receiving module, configured to receive a second message, where the second message includes first network selection information, and the first network selection information includes at least one of information about a standalone non-public network SNPN that allows the apparatus to access and information about whether the apparatus is allowed to access a public land mobile network PLMN.

With reference to the sixth aspect, in some implementations of the sixth aspect, the information about the SNPN that allows the apparatus to access includes an identifier of the SNPN that allows the apparatus to access.

With reference to the sixth aspect, in some implementations of the sixth aspect, the information about the SNPN that allows the apparatus to access further includes first priority information, indicating a priority sequence of the SNPN that allows the apparatus to access.

With reference to the sixth aspect, in some implementations of the sixth aspect, the information about whether the apparatus is allowed to access a PLMN includes an identifier of a PLMN that does not allow the apparatus to access and/or indication information indicating that the apparatus is not allowed to access a PLMN.

With reference to the sixth aspect, in some implementations of the sixth aspect, the apparatus further includes a second processing module, configured to forbid a PLMN network selection function based on the first network selection information.

With reference to the sixth aspect, in some implementations of the sixth aspect, the information about whether the apparatus is allowed to access a PLMN includes an identifier of a PLMN that allows the apparatus to access and second priority information. The second priority information indicates a priority sequence of the PLMN that allows the apparatus to access, and a priority of the second priority information is lower than a priority of the first priority information.

With reference to the sixth aspect, in some implementations of the sixth aspect, the apparatus further includes a third processing module, configured to update a network selection configuration of the apparatus based on the first network selection information.

According to a seventh aspect, a communication apparatus is provided. The communication apparatus has a function of implementing the method according to the first aspect. The function may be implemented by hardware, or may be implemented by hardware executing corresponding software. The hardware or the software includes one or more modules corresponding to the function.

According to an eighth aspect, a communication apparatus is provided. The communication apparatus has a function of implementing the method according to the second aspect. The function may be implemented by hardware, or may be implemented by hardware executing corresponding software. The hardware or the software includes one or more modules corresponding to the function.

According to a ninth aspect, a communication apparatus is provided. The communication apparatus has a function of implementing the method according to the third aspect. The function may be implemented by hardware, or may be implemented by hardware executing corresponding software. The hardware or the software includes one or more modules corresponding to the function.

According to a tenth aspect, a communication apparatus is provided, including a processor and a memory. The memory is configured to store a computer program, and the processor is configured to invoke the computer program from the memory and run the computer program, to enable the communication device to perform the method according to any one of the first aspect or the possible implementations of the first aspect.

According to an eleventh aspect, a communication apparatus is provided, including a processor and a memory. The memory is configured to store a computer program, and the processor is configured to invoke the computer program from the memory and run the computer program, to enable the communication device to perform the method according to any one of the second aspect or the possible implementations of the second aspect.

According to a twelfth aspect, a communication apparatus is provided, including a processor and a memory. The memory is configured to store a computer program, and the processor is configured to invoke the computer program from the memory and run the computer program, to enable the communication device to perform the method according to any one of the third aspect or the possible implementations of the third aspect.

According to a thirteenth aspect, a communication apparatus is provided, and includes a processor. The processor is configured to: after being coupled to a memory, and reading instructions in the memory, perform, according to the instructions, the method according to any one of the first aspect.

According to a fourteenth aspect, a communication apparatus is provided, and includes a processor. The processor is configured to: after being coupled to a memory, and reading instructions in the memory, perform, according to the instructions, the method according to any one of the second aspect.

According to a fifteenth aspect, a communication apparatus is provided, and includes a processor. The processor is configured to: after being coupled to a memory, and reading instructions in the memory, perform, according to the instructions, the method according to any one of the third aspect.

According to a sixteenth aspect, a communication apparatus is provided. The communication apparatus includes a processor and an interface circuit. The interface circuit may be a code/data read and write interface circuit, and the interface circuit is configured to receive computer-executable instructions (where the computer-executable instructions are stored in a memory, and may be directly read from the memory or may be read through another component) and transmit the computer-executable instructions to the processor. The processor is configured to run the computer-executable instructions to perform the method according to any one of the first aspect.

According to a seventeenth aspect, a communication apparatus is provided. The communication apparatus includes a processor and an interface circuit. The interface circuit may be a code/data read and write interface circuit, and the interface circuit is configured to receive computer-executable instructions (where the computer-executable instructions are stored in a memory, and may be directly read from the memory or may be read through another component) and transmit the computer-executable instructions to the processor. The processor is configured to run the computer-executable instructions to perform the method according to any one of the second aspect.

According to an eighteenth aspect, a communication apparatus is provided. The communication apparatus includes a processor and an interface circuit. The interface circuit may be a code/data read and write interface circuit, and the interface circuit is configured to receive computer-executable instructions (where the computer-executable instructions are stored in a memory, and may be directly read from the memory or may be read through another component) and transmit the computer-executable instructions to the processor. The processor is configured to run the computer-executable instructions to perform the method according to any one of the third aspect.

According to a nineteenth aspect, an apparatus (for example, the apparatus may be a chip system) is provided. The apparatus includes a processor, configured to support the communication apparatus in implementing the functions in the first aspect. In a possible design, the apparatus further includes a memory, and the memory is configured to store program instructions and data that are necessary for the communication apparatus. When the apparatus is a chip system, the apparatus may include a chip, or may include a chip and another discrete component.

According to a twentieth aspect, an apparatus (for example, the apparatus may be a chip system) is provided. The apparatus includes a processor, configured to support the communication apparatus in implementing the functions in the second aspect. In a possible design, the apparatus further includes a memory, and the memory is configured to store program instructions and data that are necessary for the communication apparatus. When the apparatus is a chip system, the apparatus may include a chip, or may include a chip and another discrete component.

According to a twenty-first aspect, an apparatus (for example, the apparatus may be a chip system) is provided. The apparatus includes a processor, configured to support the communication apparatus in implementing the functions in the third aspect. In a possible design, the apparatus further includes a memory, and the memory is configured to store program instructions and data that are necessary for the communication apparatus. When the apparatus is a chip system, the apparatus may include a chip, or may include a chip and another discrete component.

According to a twenty-second aspect, a computer-readable storage medium is provided, configured to store a computer program. The computer program includes instructions used to perform the method according to any one of the first aspect or the possible implementations of the first aspect.

According to a twenty-third aspect, a computer-readable storage medium is provided, configured to store a computer program. The computer program includes instructions used to perform the method according to any one of the second aspect or the possible implementations of the second aspect.

According to a twenty-fourth aspect, a computer-readable storage medium is provided, configured to store a computer program. The computer program includes instructions used to perform the method according to any one of the third aspect or the possible implementations of the third aspect.

According to a twenty-fifth aspect, a computer program product is provided, including a computer program. When the computer program is run on a computer device, the computer device is enabled to perform the method according to the first aspect.

According to a twenty-sixth aspect, a computer program product is provided, including a computer program. When the computer program is run on a computer device, the computer device is enabled to perform the method according to the second aspect.

According to a twenty-seventh aspect, a computer program product is provided, including a computer program. When the computer program is run on a computer device, the computer device is enabled to perform the method according to the third aspect.

According to a twenty-eighth aspect, a communication system is provided. The communication system includes a first network device, a second network device, and a terminal device. The first network device is configured to perform the steps performed by the first network device in the first aspect or the solutions provided in embodiments of this application. The second network device is configured to perform the steps performed by the second network device in the second aspect or the solutions provided in embodiments of this application. The terminal device is configured to perform the steps performed by the terminal device in the third aspect or the solutions provided in embodiments of this application. Optionally, the communication system further includes a third network device. The third network device is configured to perform the steps performed by the third network device in the first aspect or the solutions provided in embodiments of this application.

These or other aspects of this application are more concise and easier to understand in the description of the following embodiments.

### BRIEF DESCRIPTION OF DRAWINGS

FIG. 1 is a schematic diagram of an architecture of a 5G mobile communication system;
FIG. 2 is a schematic diagram of an application scenario according to an embodiment of this application;
FIG. 3 is a schematic diagram of a communication method according to an embodiment of this application;
FIG. 4 is a schematic diagram of another communication method according to an embodiment of this application;
FIG. 5 is a schematic diagram of another communication method according to an embodiment of this application;
FIG. 6 is a schematic diagram of a network interaction procedure according to an embodiment of this application;
FIG. 7 is a schematic diagram of another network interaction procedure according to an embodiment of this application;
FIG. 8 is a schematic diagram of another network interaction procedure according to an embodiment of this application;
FIG. 9 is a schematic diagram of another network interaction procedure according to an embodiment of this application;
FIG. 10 is a schematic diagram of a network interworking architecture between an SNPN and a PLMN according to an embodiment of this application;
FIG. 11A and FIG. 11 B are a schematic diagram of another network interworking architecture between an SNPN and a PLMN according to an embodiment of this application;
FIG. 12 is a schematic diagram of an N3IWF architecture in a conventional technology;
FIG. 13 is a schematic diagram of another network interaction procedure according to an embodiment of this application;
FIG. 14 is a schematic diagram of a communication apparatus according to an embodiment of this application;
FIG. 15 is a schematic diagram of another communication apparatus according to an embodiment of this application;
FIG. 16 is a schematic diagram of another communication apparatus according to an embodiment of this application;
FIG. 17 is a schematic diagram of another communication apparatus according to an embodiment of this application;
FIG. 18 is a schematic diagram of another communication apparatus according to an embodiment of this application; and
FIG. 19 is a schematic diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a world interoperability for microwave access (world interoperability for microwave access, WiMAX) communication system, a 5th generation (5th generation, 5G) system or a new radio (new radio, NR) system, or a future evolved communication system.

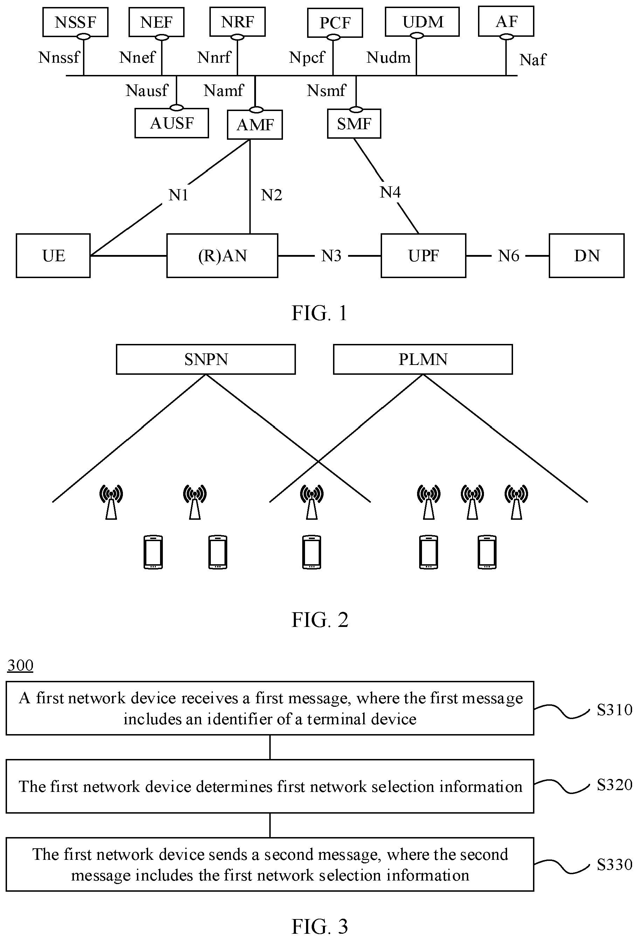

FIG. 1 is a schematic diagram of a network architecture of a communication system to which an embodiment of this application is applicable. The network architecture includes a terminal device, an access network device, an access management network element, a session management network element, a user plane network element, a policy control network element, a network slice selection network element, a network repository function network element, a network data analytics network element, a unified data management network element, a unified data repository network element, an authentication service function network element, a network capability exposure network element, an application function network element, and a data network (data network, DN) connected to an operator network. The terminal device may send service data to the data network and receive the service data from the data network, by using the access network device and the user plane network element.

The terminal device is a device having a wireless transceiver function, and may be deployed on land, where the deployment includes indoor or outdoor, handheld, wearable, or vehicle-mounted deployment, may be deployed on water (for example, on a ship), or may be deployed in air (for example, on an airplane, a balloon, and a satellite). The terminal device may communicate with a core network through a radio access network (radio access network, RAN), and exchange voice and/or data with the RAN. The terminal device may be a mobile phone (mobile phone), a tablet (Pad), a computer with a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment (user equipment, UE), a mobile station, a remote station, or the like. A specific technology, a device form, and a name that are used by the terminal device are not limited in embodiments of this application.

The access network device is a device that is in a network and that is configured to connect a terminal device to a wireless network. The access network device may be a node in the radio access network, and may also be referred to as a base station, or may also be referred to as a radio access network (radio access network, RAN) node (or device). A network device may include an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario, or may include a next generation NodeB (next generation NodeB, gNB) in a 5th generation (5th generation, 5G) mobile communication technology new radio (new radio, NR) system, or may further include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (baseband unit, BBU), a baseband pool BBU pool, a Wi-Fi access point (access point, AP), or the like, or may further include a centralized unit (centralized unit, CU) and a distributed unit (distributed unit, DU) in a cloud access network (cloud radio access network, CloudRAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol.

The access management network element is mainly used for attachment, mobility management, and a tracking area update procedure of a terminal in a mobile network. The access management network element terminates a non-access stratum (non-access stratum, NAS) message, completes registration management, connection management, reachability management, allocates a tracking area list (tracking area list, TA list), completes mobility management and the like, and transparently routes a session management (session management, SM) message to the session management network element. In a 5th generation (5th generation, 5G) communication system, the access management network element may be an access and mobility management function (access and mobility management function, AMF). In a future communication system (for example, a 6G communication system), the mobility management network element may still be an AMF network element, or may have another name. This is not limited in this application.

The session management network element is mainly used for session management in a mobile network, for example, session establishment, modification, and release. A specific function is, for example, allocating an internet protocol (internet protocol, IP) address to the terminal, or selecting a user plane network element that provides a packet forwarding function. In the 5G communication system, the session management network element may be a session management function (session management function, SMF). In the future communication system (for example, the 6G communication system), the session management network element may still be an SMF network element, or may have another name. This is not limited in this application.

The user plane network element is mainly used for processing a user packet, for example, forwarding, charging, or lawful interception. The user plane network element may also be referred to as a protocol data unit (protocol data unit, PDU) session anchor (PDU session anchor, PSA). In the 5G communication system, the user plane network element may be a user plane function (user plane function, UPF). In the future communication system (for example, the 6G communication system), the user plane network element may still be a UPF network element, or may have another name. This is not limited in this application.

The policy control network element includes a user subscription data management function, a policy control function, a charging policy control function, quality of service (quality of service, QoS) control, and the like. In the 5G communication system, the policy control network element may be a policy control function (policy control function, PCF). In the future communication system (for example, the 6G communication system), the policy control network element may still be a PCF network element, or may have another name. This is not limited in this application.

A network slice selection function network element is mainly configured to select a proper network slice for a service of the terminal device. In the 5G communication system, the network slice selection network element may be a network slice selection function (network slice selection function, NSSF) network element. In the future communication system (for example, the 6G communication system), the network slice selection network element may still be an NSSF network element, or may have another name. This is not limited in this application.

The network repository function network element is mainly configured to provide registration and discovery functions of a network element or a service provided by the network element. In the 5G communication system, the network repository function network element may be a network repository function (network repository function, NRF). In the future communication system (for example, the 6G communication system), the network repository function network element may still be an NRF network element, or may have another name. This is not limited in this application.

A network data analytics network element may collect data from each network function (network function, NF), for example, the policy control network element, the session management network element, the user plane network element, the access management network element, and the application function network element (by using a network capability exposure function network element), and perform analysis and prediction. In the 5G communication system, the network data analytics network element may be a network data analytics function (network data analytics function, NWDAF). In the future communication system (for example, the 6G communication system), the network data analytics network element may still be an NWDAF network element, or may have another name. This is not limited in this application.

The unified data management network element is mainly configured to manage subscription information of the terminal device. In the 5G communication system, the unified data management network element may be unified data management (unified data management, UDM). In the future communication system (for example, the 6G communication system), the unified data management network element may still be a UDM network element, or may have another name. This is not limited in this application.

The unified data repository network element is mainly configured to store structured data information, including subscription information, policy information, and network data or service data defined in a standard format. In the 5G communication system, the unified data repository network element may be a unified data repository (unified data repository, UDR). In the future communication system (for example, the 6G communication system), the unified data repository network element may still be a UDR network element, or may have another name. This is not limited in this application.

The authentication service function network element is mainly configured to perform security authentication on the terminal device. In the 5G communication system, the authentication service function network element may be an authentication server function (authentication server function, AUSF). In the future communication system (for example, the 6G communication system), the authentication service function network element may still be an AUSF network element, or may have another name. This is not limited in this application.

The network capability exposure network element may expose some functions of the network to an application in a controlled manner. In the 5G communication system, the network capability exposure network element may be a network capability exposure function (network exposure function, NEF). In the future communication system (for example, the 6G communication system), the network capability exposure network element may still be an NEF network element, or may have another name. This is not limited in this application.

The application function network element may provide service data of various applications for a control plane network element in a communication network of an operator, or obtain data information and control information of a network from a control plane network element in a communication network. In the 5G communication system, the application function network element may be an application function (application function, AF). In the future communication system (for example, the 6G communication system), the application function network element may still be an AF network element, or may have another name. This is not limited in this application.

The data network is mainly configured to provide a data transmission service for the terminal device. The data network may be a private network, for example, a local area network, may be a public data network (public data network, PDN), for example, the Internet (Internet), or may be a dedicated network jointly deployed by operators, for example, a dedicated network deployed to configure an IP multimedia network subsystem (IP multimedia core network subsystem, IMS) service.

It should be understood that the foregoing network elements or the functions may be network elements in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one function module in one device. This is not specifically limited in embodiments of this application.

For ease of description, subsequently, this application is described by using an example in which the access management network element is an AMF network element, the session management network element is an SMF network element, the policy control network element is a PCF network element, the network repository function network element is an NRF network element, the unified data management network element is a UDM network element, the unified data storage network element is a UDR network element, and the authentication service function network element is an AUSF network element. Further, the AMF network element is referred to as an AMF for short, the PCF network element is referred to as a PCF for short, the NRF network element is referred to as an NRF for short, the UDM network element is referred to as a UDM for short, and the AUSF network element is referred to as an AUSF for short. In other words, all AMFs subsequently described in this application may be replaced with access management network elements, all PCFs may be replaced with policy control network elements, all NRFs may be replaced with network repository function network elements, all UDMs may be replaced with unified data management network elements, all UDRs may be replaced with unified data storage network elements, and all AUSFs may be replaced with authentication service function network elements. Currently, a 5th generation mobile communication technology is in a period of booming development. A 5G mobile communication system architecture includes user equipment (user equipment, UE), a radio access network (radio access network, RAN), a Core core network, and a data network (data network, DN).

A non-public network NPN is a non-public 5G network. The non-public network may implement a public network integrated NPN (public network integrated NPN, PNI-NPN) based on support of a PLMN, or may implement a standalone NPN (standalone NPN, SNPN) without depending on a network function of the PLMN.

The SNPN network is independently deployed, and may be identified by using PLMN ID+NID. The NID is a network identifier. The PLMN ID may be an inherent value reserved by a third-party operator, or may be a specific value of a PLMN operator that deploys the SNPN. In the SNPN network, a cell in the SNPN network broadcasts PLMN ID+NID, and the UE selects a to-be accessed NPN network based on broadcast information and configured network selection information. If the UE finds that the configured network selection information (PLMN ID+NID 1) is different from the PLMN ID or PLMN ID+NID 2 broadcast by the network, the UE does not select the SNPN network to access.

The SNPN network may support a terminal in accessing the SNPN in an "external subscription" manner. To be specific, user subscription of the terminal is owned by an external entity (for example, a mobile network operator (mobile network operator, MNO)) independent of the SNPN network, and the SNPN network allows the terminal of this type to access the SNPN by using the external subscription.

If a terminal device needs to access the SNPN in the external subscription manner, the terminal device needs to be located in coverage of the SNPN, and cannot be covered by the PLMN. However, during actual application, as shown in FIG.2, the terminal device may be located in coverage of both the SNPN and the PLMN, or the terminal device may be located only in coverage of the PLMN. In the two cases, there is currently no good solution to whether to forbid accessing the PLMN or select the PLMN to access, and how to select and access the SNPN network.

This application provides a communication method. A terminal device may obtain SNPN network selection information from a PLMN or an SNPN, so that when being located in coverage of different networks, the terminal device may select the SNPN based on the SNPN network selection information, and access the SNPN.

FIG. 3 is a schematic diagram of a communication method according to an embodiment of this application. As shown in FIG. 3, the method 300 includes steps S310 to S330. The following describes these steps in detail.

S310: A first network device receives a first message, where the first message includes an identifier of a terminal device.

Optionally, the identifier of the terminal device may be a subscription permanent identifier (subscription permanent identifier, SUPI)/subscription concealed identifier (subscription concealed identifier, SUCI).

Optionally, the first network device may belong to an SNPN network, or may belong to a PLMN network. When the first network device belongs to the SNPN network, the first network device may receive the first message from the terminal device, or may obtain the message from the PLMN network. In this case, a network element in the PLMN network may serve as a relay network element to forward a message between the terminal device and the SNPN. When the first network device belongs to the PLMN network, the first network device may receive the first message from the terminal device.

S320: The first network device determines first network selection information.

In an embodiment, the first network selection information may include at least one of information about an SNPN that allows the terminal device to access and information about whether the terminal device is allowed to access a PLMN.

In an embodiment, that the first network device determines first network selection information may include: The first network device determines the first network selection information based on at least one of subscription data, policy data, and a local configuration of the terminal device.

Further, that the first network device determines the first network selection information based on at least one of subscription data, policy data, and a local configuration of the terminal device may further include: If the subscription data and the policy data of the terminal device coexist, the first network device preferentially determines the first network selection information based on the policy data of the terminal device.

In an embodiment, to determine the network selection information, the first network device may send a request message to another network element, to obtain network selection data of the terminal device. Specifically, the first network device may be an AMF. Before the first network device determines first network selection information, the method may further include: The first network device sends a third message to a UDM. The third message is used to obtain the subscription data of the terminal device, and the subscription data includes at least one of the information about the SNPN that allows the terminal device to access and the information about whether the terminal device is allowed to access a PLMN. The first network device receives a fourth message sent by the UDM. The fourth message includes the subscription data of the terminal device.

Optionally, the first network selection information may be the subscription data of the terminal device. In this case, the UDM may directly send the subscription data to the terminal device.

Further, to obtain the policy data, the first network device may send a request message to a PCF. Specifically, the first network device may send a fifth message to the PCF. The fifth message is used to obtain the policy data of the terminal device, and the policy data includes at least one of the information about the SNPN that allows the terminal device to access and the information about whether the terminal device is allowed to access a PLMN. The first network device receives a sixth message sent by the PCF. The sixth message includes the policy data of the terminal device.

Optionally, the first network selection information may be the policy data of the terminal device. In this case, the PCF may directly send the policy data to the terminal device.

In an embodiment, the information that is about the SNPN that allows the terminal device to access and that is in the first network selection information may include an identifier of the SNPN that allows the terminal device to access. Optionally, the information may further include first priority information, indicating a priority sequence of the SNPN that allows the terminal device to access.

In an embodiment, to enable the terminal device to access the SNPN, the terminal device may be forbidden from accessing the PLMN. In this case, optionally, the information that is about whether the terminal device is allowed to access a PLMN and that is in the first network selection information may include an identifier of a PLMN that does not allow the terminal device to access and/or indication information indicating that the terminal device is not allowed to access a PLMN.

Further, when the first network selection information includes information indicating that the terminal device is not allowed to access a PLMN, the local configuration of the first network device may include information indicating that the terminal device is not allowed to access a PLMN and/or information indicating that the terminal is capable of accessing only the SNPN.

The terminal device is forbidden from accessing a PLMN, so that the terminal device may select the SNPN to access.

In another embodiment, the terminal device may alternatively be allowed to access a PLMN, and then access the SNPN by using the PLMN, so that the terminal device accesses the SNPN. In this case, optionally, the first network selection information may include information indicating that the terminal device is allowed to access a PLMN. In this case, the first network selection information may include an identifier of a PLMN that allows the terminal device to access and second priority information. The second priority information indicates a priority sequence of the PLMN that allows the terminal device to access, and a priority indicated by the second priority information is lower than a priority indicated by the first priority information.

In an embodiment, the first network device may access the SNPN by using the PLMN by changing a status of the terminal device. Specifically, before the first network device determines first network selection information, the method further includes: The first network element marks the terminal device as being in a roaming state. A serving network of the terminal device is a PLMN, and a home network of the terminal device is an SNPN.

The terminal device that is actually in a non-roaming state is set to being in the roaming state, so that the terminal device can visit the SNPN by using the PLMN, thereby implementing access of the terminal device to the SNPN.

Further, that the first network element marks the terminal device as being in a roaming state specifically includes: The first network element marks, based on the local configuration or the subscription data of the UE, the terminal device as being in the roaming state. The local configuration may include an identifier that is of a terminal device in a specific range and that is allocated to the SNPN for use, or first indication information that indicates the first network element to mark, when an identifier of the terminal device includes an identifier of a specific SNPN, the terminal device as being in the roaming state. The subscription data of the terminal device may include second indication information, and the second indication information indicates that if the terminal device performs access from a PLMN, the terminal device enters the roaming state, or the second indication information indicates that the home network of the terminal device is an SNPN. Subsequent steps in which the first network device obtains the SNPN network selection information of the terminal device are the same as those described above, and details are not described herein again.

In an embodiment, the first network device belongs to the SNPN, and the AMF in the PLMN serves as a relay device to forward a message between the first network device and the AMF. The AMF in the PLMN may determine, based on the local configuration, to serve as the relay device to process the first message sent by the terminal device. To implement message forwarding, the AMF in the PLMN may send an NF discovery request message to an NRF in the PLMN, to obtain an address of the first network device, and then may send the first message to the first network device. After obtaining the network selection information fed back by the UDM and/or the PCF, the first network device determines final network selection information, and sends the final network selection information to the relay device. The relay device sends the network selection information to the terminal device.

In another embodiment, content of the SNPN network selection information is similar to that of the foregoing obtained SNPN network selection information. A difference lies in that the first network device in this embodiment of this application may further send user equipment route selection policy (user equipment route selection policy, URSP) information including a data network name (data network name, DNN) or single network slice selection assistance information (single network slice selection assistance information, S-NSSAI). The URSP information may be generated by the PCF based on the local configuration, and is carried in policy information to the first network device. The information may indicate the terminal device to establish a PDU session of a specific DNN/S-NSSAI in the PLMN or the SNPN.

It should be understood that the information about the SNPN that allows the terminal device to access and the information about whether the terminal device is allowed to access a PLMN that are described in this embodiment of this application are information included in the first network selection information. The information about the SNPN that allows the terminal device to access and the information about whether the terminal device is allowed to access a PLMN that are in the subscription data or the policy data may be different from or the same as the information about the SNPN that allows the terminal device to access and the information about whether the terminal device is allowed to access a PLMN that are in the first network selection information finally determined by the first network device. The first network device may finally determine the first network selection information based on the information included in the received subscription data or policy data, or directly use the policy data or the subscription data as the first network selection information.

S330: The first network device sends a second message, where the second message includes the first network selection information.

Optionally, the second message may be implemented in a plurality of manners. For example, the second message may be a registration accept message, a registration reject message, or a DL NAS Transport message. Specifically, when the first network device belongs to the PLMN, and the message that is sent by the UDM or the PCF and that is received by the first network device includes a failure result indication, or when an AUSF of the PLMN fails to authenticate the terminal device, the second message may be a registration reject message. If the PLMN is used as an onboarding network, the second message may be a registration accept message.

When the first network device belongs to the PLMN, and after the first network device sends the second message to the terminal device, the terminal device may continue to access the network based on the network selection information in the second message, and access the SNPN by using the network.

In an embodiment, when the first network device belongs to the PLMN, and after the first network device marks the terminal device as being in the roaming state, the first network device may receive a non-access stratum (non-access stratum, NAS) session management (session management, SM) message from the terminal device, for example, a PDU session establishment request message. The first network device may establish a PDU session between the PLMN and the SNPN based on different roaming manners. Specifically, the method further includes: The first network device receives a seventh message sent by the terminal device. The seventh message is used to request to establish a first PDU session of a DNN/S-NSSAI. The first network element establishes the first PDU session in a non-roaming manner when the subscription of the UE indicates that the first PDU session is home routed (home routed, HR) roaming, or establishes the first PDU session in an HR roaming manner when the subscription of the UE indicates that the first PDU session is local breakout (local breakout, LBO) roaming.

In another embodiment, the first network device belongs to the SNPN, and the AMF in the PLMN serves as a relay device to forward a message between the first network device and the AMF. Specifically, the relay device forwards a session-related message to the first network device, and the first network device establishes a PDU session in the SNPN. The first network device notifies the relay device of a data transmission uplink address of an SNPN UPF. The relay device selects a PLMN SMF, and the PLMN SMF then selects the UPF of the PLMN. Subsequently, the relay device sends a data transmission downlink address of the PLMN UPF to the first network device, so that transmission data can be transmitted between the UPF of the SNPN and the UPF of the PLMN. Therefore, interworking between the SNPN and the PDU session in the PLMN is implemented, and the terminal device further visits the SNPN by using the PLMN, and accesses the SNPN by using the PLMN.

The SNPN network selection information is provided for the terminal device, so that the terminal device can select a proper SNPN to access in different scenarios.

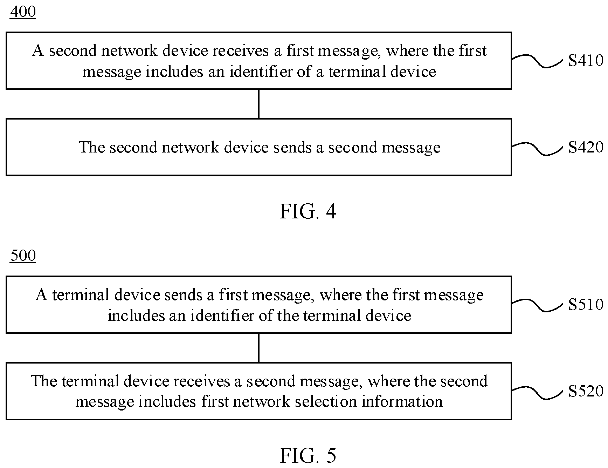

FIG. 4 is a schematic diagram of another communication method according to an embodiment of this application. As shown in FIG. 4, the method 400 includes steps S410 and S420. The following describes the two steps in detail.

S410: A second network device receives a first message, where the first message includes an identifier of a terminal device.

Optionally, the second network device in this embodiment of this application belongs to a PLMN.

S420: The second network device sends a second message.

In an embodiment, the second message includes at least one of information about an SNPN that allows the terminal device to access and information about whether the terminal device is allowed to access a PLMN.

In an embodiment, the second network device is a UDM, the second message is subscription data of the terminal device, and the subscription data includes at least one of the information about the SNPN that allows the terminal device to access and the information about whether the terminal device is allowed to access a PLMN.

In another embodiment, the second network device is a PCF, the second message is policy data of the terminal device, and the policy data includes at least one of the information about the SNPN that allows the terminal device to access and the information about whether the terminal device is allowed to access a PLMN.

Optionally, the information about the SNPN that allows the terminal device to access may include at least one of the following information: indication information indicating that access from only the SNPN is allowed; an identifier of the SNPN that allows access; or first priority information, indicating a priority of the SNPN that allows access.

Optionally, the information about whether the terminal device is allowed to access a PLMN includes at least one of the following information: indication information indicating that access from a PLMN is not allowed; or an identifier of a PLMN that does not allow access.

Optionally, when the information about the SNPN that allows the terminal device to access includes an identifier of the SNPN that allows access and first priority information, the information about whether the terminal device is allowed to access a PLMN includes at least one of the following information: indication information indicating that access to a PLMN is allowed; an identifier of a PLMN that allows access; or second priority information, indicating a priority of the PLMN that allows access. The priority indicated by the second priority information is lower than a priority indicated by the first priority information.

It should be understood that the information about the SNPN that allows the terminal device to access and the information about whether the terminal device is allowed to access a PLMN that are described in this embodiment of this application are used to describe information included in the subscription data and the policy data. The information about the SNPN that allows the terminal device to access and the information about whether the terminal device is allowed to access a PLMN that are in the subscription data and the policy data may be the same as or different from the information about the SNPN that allows the terminal device to access and the information about whether the terminal device is allowed to access a PLMN that are in the first network selection information finally determined by the first network device in the foregoing embodiment of this application. The first network device may finally determine the first network selection information based on the received subscription data or policy data, or directly use the subscription data and the policy data as the first network selection information.

The different network selection information is provided for the terminal device, so that the terminal device can select a proper manner to access the SNPN in different scenarios.

FIG. 5 is a schematic diagram of another communication method according to an embodiment of this application. As shown in FIG. 5, the method 500 includes steps S510 and S520. The following describes the two steps in detail.

S510: A terminal device sends a first message, where the first message includes an identifier of the terminal device.

S520: The terminal device receives a second message, where the second message includes first network selection information.

In an embodiment, the first network selection information includes at least one of information about an SNPN that allows the terminal device to access and information about whether the terminal device is allowed to access a PLMN.

Optionally, content included in the information about the SNPN that allows the terminal device to access and the information about whether the terminal device is allowed to access a PLMN in this embodiment of this application is the same as that in the information included in the embodiment in FIG. 3. Details are not described herein again.

After receiving the second message, the terminal device may further perform configuration based on the second message. Specifically, the terminal device updates a network selection configuration of the terminal device based on the first network selection information.

In another embodiment, when the information about whether the terminal device is allowed to access a PLMN includes information indicating that the terminal device is not allowed to access a PLMN, the terminal device may not select a PLMN to access. Specifically, the terminal device forbids a PLMN network selection function based on the first network selection information.

Configuration is performed based on the received network selection information, so that the terminal device can select, based on the latest SNPN network selection information, a more proper network to access.

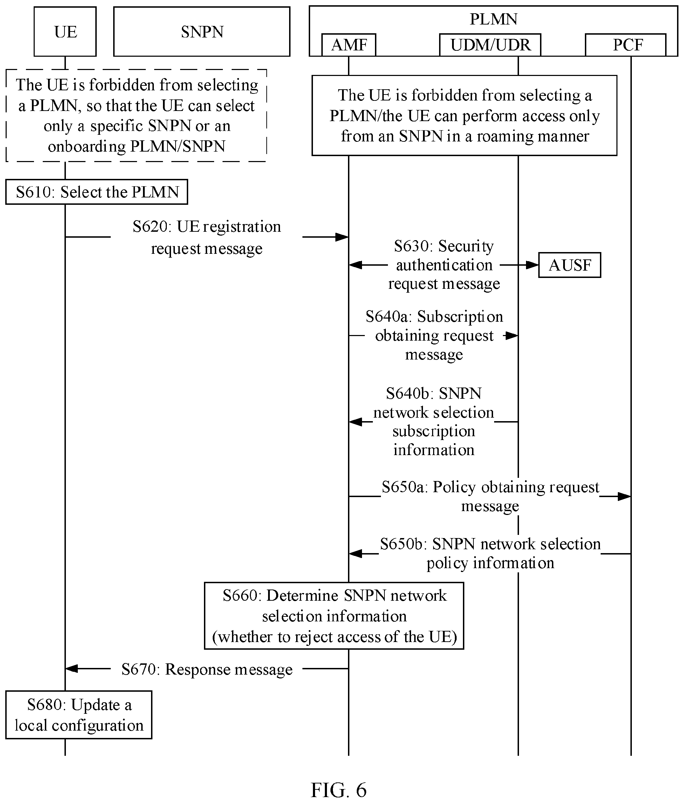

FIG. 6 is a schematic diagram of a network interaction procedure according to an embodiment of this application. S610: When UE is located in only coverage of a PLMN but not in coverage of an SNPN network, the UE may select the PLMN network to initiate an access process. S620: The UE initiates a registration request message to an AMF of the PLMN, where the registration request message may include an identifier (for example, an SUPI or an SUCI) of the UE.

The AMF of the PLMN obtains, from a RAN, an identifier of the PLMN.

S630: After receiving the registration request message, the PLMN AMF may send a security authentication request message to a PLMN AUSF, where the request message may include the identifier of the UE and the PLMN ID. If the AUSF fails to authenticate the UE, the PLMN AMF may send, to the UE, a UE registration reject message carrying a reason, skip steps S640 and S650, and perform steps S660 to S680. The PLMN AUSF may forbid, in a local configuration manner, the UE from accessing the PLMN network, for example, configure information indicating that the terminal device is forbidden from accessing the PLMN and/or information indicating that the terminal device can access the PLMN only in an SNPN roaming manner.

S640a: If the AUSF successfully authenticates the UE, the PLMN AMF sends a subscription obtaining request message to a PLMN UDM, where the request may include the identifier of the UE and the PLMN ID. S640b: The PLMN UDM feeds back a subscription obtaining response message to the PLMN, where the subscription obtaining response message carries SNPN network selection subscription of the UE, and optionally, may further include specific network selection subscription of the PLMN. If the PLMN UDM determines, based on a local configuration, that the UE is not allowed to access the PLMN, the PLMN UDM feeds back an obtaining failure result to the PLMN AMF, and indicates a reason. In this case, step S650 is skipped. Optionally, the PLMN UDM may configure, in the local configuration manner, the information indicating that the terminal device is forbidden from accessing the PLMN and/or the information indicating that the terminal device can access the PLMN only in an SNPN roaming manner. It should be understood that the PLMN UDM may further store correspondences between identifiers of a plurality of terminal devices, identifiers of corresponding SNPN networks, and identifiers of corresponding PLMN networks.

Optionally, S650: The PLMN AMF may further send a policy information obtaining request message to the PLMN PCF, where the request message may include the identifier of the UE and the PLMN ID. S650b: The PLMN PCF feeds back a policy information obtaining response message to the PLMN AMF, where the response message may include a specific SNPN network selection policy configured by the PLMN. Optionally, if the PCF does not allow, based on the local configuration, the UE to access the PLMN, the PLMN PCF feeds back an obtaining failure result to the PLMN AMF, and indicates a reason. Optionally, the PLMN PCF may configure, in the local configuration manner, the information indicating that the terminal device is forbidden from accessing the PLMN and/or the information indicating that the terminal device can access the PLMN only in an SNPN roaming manner. It should be understood that the PLMN PCF may store a network selection policy of the PLMN network in the local configuration manner.

S660: The SNPN AMF determines SNPN network selection information of the UE based on at least one of the local configuration, the SNPN network selection subscription of the UE in S640, and the SNPN network selection policy in S250, and determines whether to reject access of the UE. Optionally, the local configuration may be the information indicating that the terminal device is forbidden from accessing the PLMN and/or the information indicating that the terminal device can access the PLMN only in an SNPN roaming manner. Optionally, when the network selection subscription and the network selection policy coexist, the AMF preferentially determines the final SNPN network selection information according to the network selection policy.

S670: The PLMN AMF sends a response message to the UE. Optionally, if the AUSF successfully authenticates the UE in S630, the response message may include the SNPN network selection information and/or specific network selection information of the PLMN. Optionally, the response message may further include indication information, indicating the UE to update a configuration and reselect a network. Optionally, the response message may be sent by using a DL NAS transport message or a registration reject/receive message. When the PLMN network determines to reject access of the UE in S630, S640, and S650, the AMF sends a registration reject message, where the registration reject message carries a reject reason. If the PLMN is used as an onboarding network, the PLMN AMF sends a registration receive message.

S680: The UE updates the local configuration based on the SNPN network selection information and/or the specific network selection information of the PLMN, and determines whether to reselect a network or forbid PLMN network selection. Optionally, if receiving the registration reject message and obtaining the reject reason, the UE updates a network selection configuration based on the reject reason, and removes the PLMN ID from an optional list or adds the PLMN ID to a forbidden list.

In this embodiment of this application, the UE is forbidden from accessing the PLMN, and the corresponding SNPN network selection information is returned to the UE by using the PLMN, so that the UE can select a proper SNPN based on the SNPN network selection information, and access the SNPN.

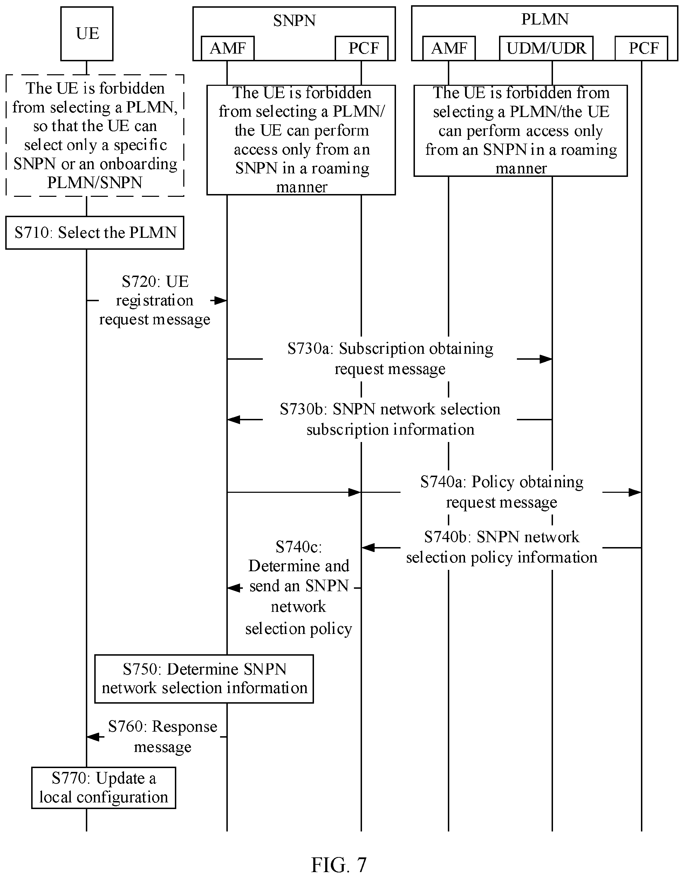

FIG. 7 is a schematic diagram of a network interaction procedure according to an embodiment of this application. S710: When UE is located in coverage of an SNPN, the UE selects the SNPN to access. S720: The UE initiates a registration request message to an SNPN AMF, where the registration request message may include an identifier (for example, an SUPI or an SUCI) of the UE.

S730a: The SNPN AMF sends a subscription obtaining request message to a UDM of a PLMN, where the request message may carry the identifier of the UE and an identifier of the SNPN. S730b: The PLMN UDM sends a subscription obtaining response message to the SNPN AMF, where the message may include SNPN network selection subscription of the UE. Optionally, the response message may further include specific network selection subscription of the PLMN. Optionally, the PLMN UDM may configure, in a local configuration manner, information indicating that the terminal device is forbidden from accessing the PLMN and/or information indicating that the terminal device can access the PLMN only in an SNPN roaming manner. It should be understood that the PLMN UDM may further store correspondences between identifiers of a plurality of terminal devices, identifiers of corresponding SNPN networks, and identifiers of corresponding PLMN networks.

Optionally, the SNPN may further send a request message to a PLMN PCF, to request to obtain policy information. Specifically, in S740a, the SNPN AMF sends a policy request obtaining message to the PLMN PCF by using an SNPN PCF, where the message may include the identifier of the UE and the identifier of the SNPN. S740b: The PLMN PCF sends a policy information obtaining response message to the SNPN PCF, where the response message may include a specific SNPN network selection policy configured by the PLMN. S740c: The SNPN PCF determines a specific SNPN network selection policy of the UE based on the response message fed back by the PLMN PCF and a specific network selection policy configured by the SNPN PCF. For example, the SNPN PCF may combine a locally configured specific network selection policy with the network selection policy fed back by the PLMN PCF. Then, the SNPN PCF sends the determined SNPN network selection policy to the SNPN AMF. Optionally, the PLMN PCF may configure, in the local configuration manner, the information indicating that the terminal device is forbidden from accessing the PLMN and/or the information indicating that the terminal device can access the PLMN only in an SNPN roaming manner. It should be understood that the PLMN PCF may store the network selection policy of the SNPN network in the local configuration manner. The SNPN PCF may alternatively store the network selection policy of the SNPN network in the local configuration manner.

S750: The SNPN AMF determines the SNPN network selection information of the UE based on at least one of locally configured SNPN configuration information, the SNPN network selection subscription obtained in S730b, and the SNPN network selection policy obtained in S740c. Optionally, the local configuration may include the information indicating that the terminal device is forbidden from accessing the PLMN and/or the information indicating that the terminal device can access the PLMN only in an SNPN roaming manner. Optionally, when the network selection subscription and the network selection policy coexist, the AMF preferentially determines the final SNPN network selection information according to the network selection policy.

S760: The SNPN AMF sends a response message to the UE, where the response message may include the SNPN network selection information. Optionally, the response message may be sent in a form of a DL NAS transport message, or may be sent to the UE in a manner of a UE registration receive message. The response message may further include indication information, indicating the UE to update a configuration and reselect a network.

S770: The UE updates the local configuration based on the obtained SNPN network selection information, or forbids PLMN network selection. Content herein is similar to that in the application embodiment in FIG. 6, and details are not described herein again.

Optionally, the SNPN network selection information in the two application embodiments in FIG. 6 and FIG. 7 may include information about an SNPN that allows access and/or information about a PLMN that does not allow access. Optionally, the SNPN network selection information may be represented in a list manner, for example, a forbidden list (PLMN ID), (PLMN ID, forbidden indication), an optional list (PLMN ID+NID), or (PLMN ID+NID, priority (priority)).

Optionally, the UE in the two embodiments in FIG. 6 and FIG. 7 may alternatively preconfigure the SNPN network selection information, and the UE is limited to select only a specific SNPN or an onboarding SNPN/PLMN. The SNPN network selection information preconfigured by the UE may include a forbidden list (PLMN ID), (PLMN ID, forbidden indication), an optional list (PLMN ID+NID), (PLMN ID+NID, priority), or the like. The UE may select an SNPN network based on the SNPN network selection information, or forbid a PLMN network selection function. In this way, the UE does not discover or select a PLMN network to access in a subsequent process. The onboarding network selection information configured by the UE can be used only when the UE has no valid subscription, and includes an onboarding network list (PLMN ID/PLMN ID+NID, priority) or (PLMN ID/PLMN ID+NID, priority, onboarding indication).

In this embodiment of this application, the UE is forbidden from accessing the PLMN, and the corresponding SNPN network selection information is returned to the UE by using the PLMN, so that the UE can select a proper SNPN based on the SNPN, and access the SNPN.

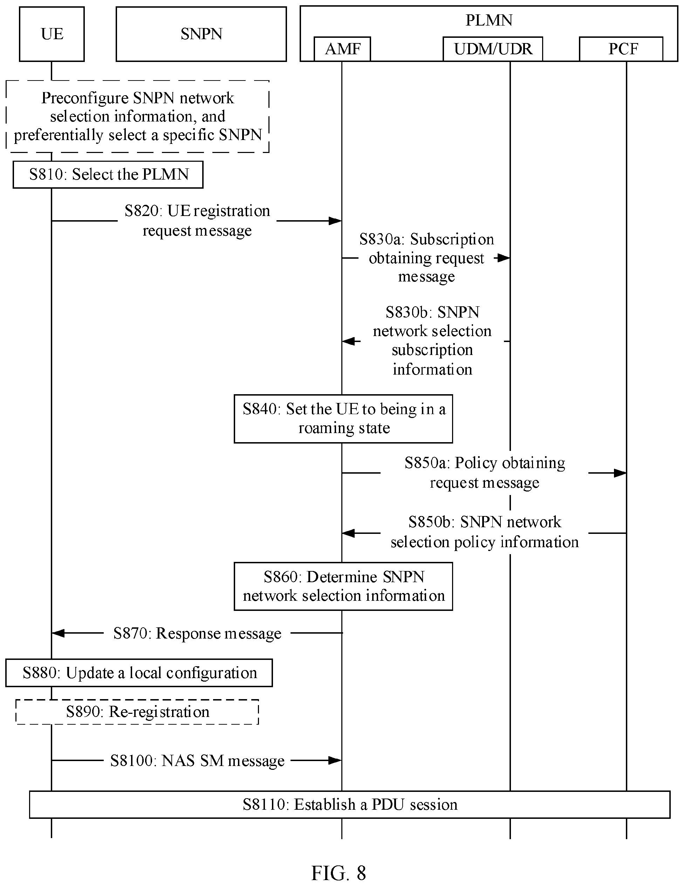

FIG. 8 is a schematic diagram of another network interaction procedure according to an embodiment of this application. S810: When UE is not covered by an SNPN, the UE selects a PLMN network to access. S820: The UE sends a NAS message to the PLMN. Optionally, the message may be a UE registration request, and the request message may include an identifier of the UE.

S830a: A PLMN AMF sends a subscription obtaining request message to a PLMN UDM, where the request may include the identifier of the UE and a PLMN ID. S830b: The PLMN UDM feeds back a subscription obtaining response message to the PLMN, where the subscription obtaining response message carries SNPN network selection subscription information of the UE. Optionally, the PLMN UDM may store correspondences between identifiers of a plurality of terminal devices, identifiers of corresponding SNPN networks, and identifiers of corresponding PLMN networks.

S840: The PLMN AMF allows, based on a local configuration or subscription data of the UE, the UE to access the PLMN, and sets the UE to being in a roaming state, where a serving network (serving network, SN)=PLMN, and a home network (home network, HN)=SNPN. Optionally, the local configuration of the PLMN AMF may include at least one of the following: an identifier that is of a terminal device in a specific range and that is allocated to the SNPN for use, or first indication information that indicates the PLMN AMF to mark, when the identifier of the terminal device includes an identifier of a specific SNPN, the UE as being in the roaming state. The AMF may identify a specific terminal device by using the local configuration, and set the terminal device to being in the roaming state, so that the UE can interwork with the SNPN by using the PLMN. The subscription data of the UE may include second indication information, indicating that if the UE performs access from a PLMN, the AMF sets the UE to being in the roaming state, or indicating that the home network of the UE is an SNPN.

S850a: The PLMN AMF sends a policy information obtaining request message to the PLMN PCF, where the request message may include the identifier of the UE and the PLMN ID. S850b: The PLMN PCF feeds back a policy information obtaining response message to the PLMN AMF, where the response message may include a specific SNPN network selection policy configured by the PLMN. It should be understood that the PLMN PCF may store the network selection policy of the SNPN network in the local configuration manner.

S860: The PLMN AMF determines SNPN network selection information of the UE based on at least one of locally configured SNPN configuration information, the SNPN network selection subscription information of the UE in S830, and the SNPN network selection policy information in S850. Optionally, when the network selection subscription and the network selection policy coexist, the AMF preferentially determines the final SNPN network selection information according to the network selection policy.

S870: The PLMN AMF sends a response message to the UE, where the response message may include the SNPN network selection information. Optionally, the response message may be sent in a form of a DL NAS transport message, or may be sent to the UE in a manner of a UE registration receive message. The response message may further include indication information, indicating the UE to update a configuration and reselect a network.

S880: The UE updates the local configuration based on the obtained SNPN network selection information.

Optionally, S890: After updating the configuration based on the network selection information, if the UE discovers the SNPN network in the local configuration, the UE may re-register with the SNPN based on a conventional technology. A specific process belongs to the conventional technology, and details are not described in this embodiment of this application.

Alternatively, further, the UE may continue to access the PLMN network in the foregoing steps. S8100: The PLMN AMF receives a NAS SM message sent by the UE, for example, a PDU session establishment request.

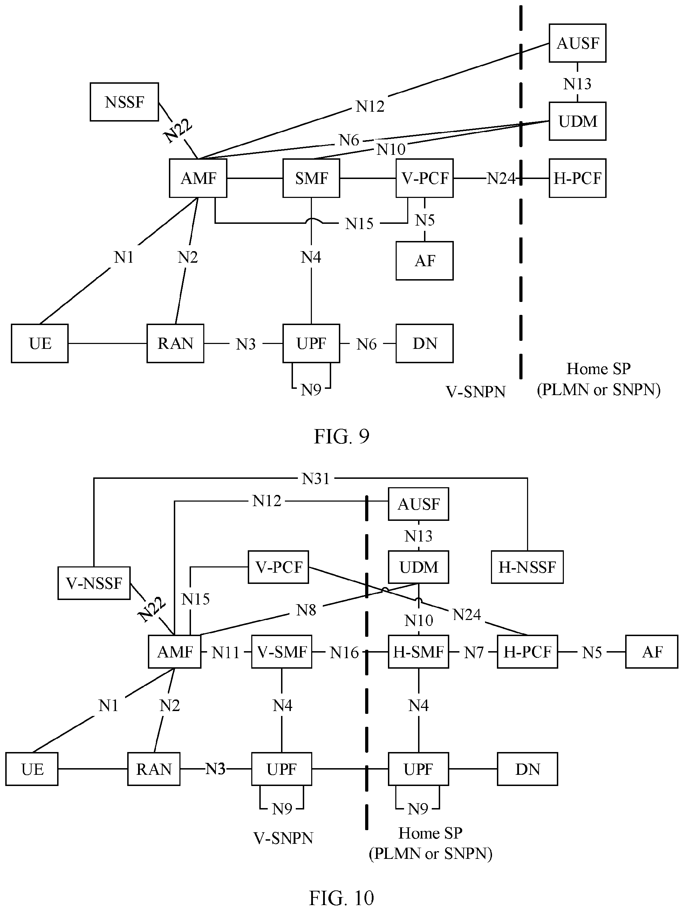

Specifically, FIG. 9 and FIG. 10 are schematic diagrams of interworking architectures between an SNPN and a PLMN in two roaming manners (local breakout (local breakout, LBO) and home routed (home routed, HR)) in a conventional technology. Normally, when UE is in a roaming state, a home network (home network, HN) of the UE is a PLMN, and a serving network (serving network, SN) of the UE is an SNPN. In an LBO case, a PDU session anchor established by the UE is terminated at a UPF of an SNPN. In an HR scenario, a PDU session anchor established by the UE is terminated at a UPF of a PLMN. However, in step S840, the AMF of the PLMN sets the UE to being in the roaming state. However, an actual situation is that the UE is in coverage of the PLMN at this time, and an HN of the UE is the PLMN. Therefore, the roaming state that is of the UE and that is set at this time is equivalent to an assumed roaming state. In this assumed roaming state, if the corresponding DNN/S-NSSAI indicates HR roaming based on a roaming indication in the subscription, the PLMN AMF determines to use a non-roaming PDU session, and the session is terminated at the PLMN UPF. If the DNN/S-NSSAI indicates LBO roaming, the PLMN AMF determines to use HR roaming, the HN is equal to the SNPN, and the PDU session is terminated at the SNPN UPF.

A process in which the SNPN AMF processes the PDU session belongs to a conventional technology. For details, refer to PDU session establishment processes in FIG. 9 and FIG. 10 in the conventional technology. Details are not described in this embodiment of this application.

In this embodiment of this application, when the UE is not located in the coverage of the SNPN but is located only in the coverage of the PLMN, the UE is set to being in the roaming state, so that the UE accesses the SNPN by using the PLMN.

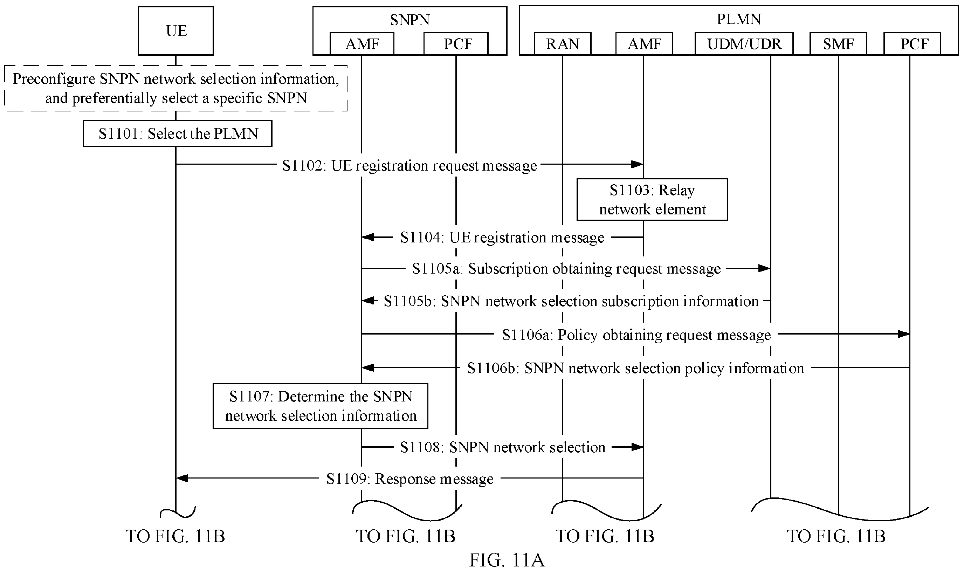

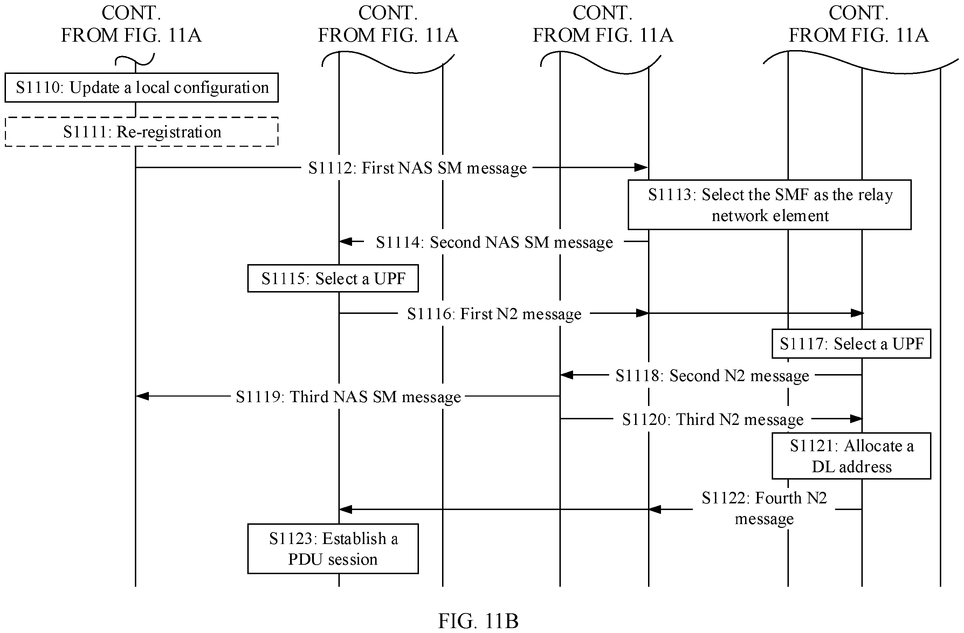

FIG. 11A and FIG. 11 B are a schematic diagram of another network interaction procedure according to an embodiment of this application. As shown in FIG. 11A and FIG. 11B, S1101 and S1102 are the same as S810 and S820.

51103: An AMF of the PLMN determines, based on a local configuration, to serve as a relay network element to process a non-access stratum (non-access stratum, NAS) message of the UE, where the NAS message may be a registration request message. The local configuration of the PLMN AMF may include at least one of the following: an identifier that is of a terminal device in a specific range and that is allocated to the SNPN for use, or first indication information that indicates the PLMN AMF to use, when the identifier of the terminal device includes an identifier of a specific SNPN, the AMF as the relay network element to process the NAS message. The PLMN AMF determines an SNPN AMF based on the identifier of the terminal device. Specifically, the PLMN AMF sends an NF discovery request to a PLMN NRF, the PLMN NRF feeds back one or more candidate SNPN AMFs to the PLMN AMF, and the PLMN AMF selects one candidate SNPN AMF to process the request message of the UE. The PLMN AMF may store a correspondence between the UE ID and the SNPN AMF. It should be understood that the PLMN NRF may store correspondences between identifiers of a plurality of terminal devices, identifiers of corresponding SNPNs, and SNPN AMFs.

S1104: The PLMN AMF forwards the NAS message to the SNPN AMF.

Subsequently, the SNPN AMF obtains SNPN network selection information by sending a message to a network element of the PLMN. Specific steps are the same as steps S730 to S750 in FIG. 7. Details are not described again in this embodiment of this application.

S1108: The SNPN AMF sends the SNPN network selection information to the PLMN AMF.

S1109: The PLMN AMF serves as a relay device to forward the SNPN network selection information to the UE.

S1110: The UE receives the SNPN network selection information, updates a local configuration based on the information, and determines whether to reselect a network.

Optionally, S1111: If the UE finds, based on an updated local configuration, that the UE is in coverage of an SNPN indicated in the SNPN network selection information, the UE may re-register with the SNPN and perform access.

Alternatively, the UE may continue to use the PLMN as a relay by using the PLMN network in the foregoing steps, to implement interworking between the UE and the SNPN. S 1112: The PLMN AMF receives a first NAS SM message sent by the UE, for example, a PDU session establishment request message.

S1113: Similar to S1103, the PLMN AMF sends an NF discovery request message to the PLMN NRF, the PLMN NRF feeds back, to the PLMN AMF, an SMF that is of the PLMN and that corresponds to the identifier of the terminal device, and the PLMN AMF uses the PLMN SMF as a relay. Optionally, the PLMN NRF may feed back one or more PLMN SMFs to the PLMN AMF, and the PLMN AMF may select a most proper candidate PLMN SMF as the relay network element based on a preset condition.

S1114: The PLMN AMF sends a second NAS SM message to the SNPN AMF. Optionally, the message may be the first NAS SM message, or may be a second NAS SM message generated by the PLMN AMF based on the first NAS SM message.

S1115: The SNPN AMF selects a UPF by using the SMF according to a PDU session establishment method in a conventional technology.

S1116: The SNPN AMF sends a first N2 message to the PLMN AMF. The first N2 message may include an address of the UPF allocated by the SNPN SMF in S1115, namely, an uplink (uplink, UL) address. The PLMN AMF forwards the first N2 message to the PLMN SMF, where the first N2 message may carry indication information, indicating the PLMN SMF to serve as a relay device to forward a message between the SNPN and the PLMN.

S1117: The PLMN SMF selects a UPF in a PDU session establishment manner in the conventional technology.

S1118: The PLMN SMF sends a second N2 message to a PLMN RAN, where the second N2 message may include an address of the UPF selected in S1118, namely, an uplink (uplink, UL) address.

S1119: The PLMN RAN sends a third NAS SM message to the UE in a manner in the conventional technology, and allocates a first downlink (downlink, DL) address.

S1120: The PLMN RAN sends a third N2 message to the PLMN AMF, where the third N2 message includes the first DL address, and the PLMN AMF feeds back the first DL address to the PLMN SMF.

S1121: The PLMN SMF allocates a second DL address to the UPF according to the DL address.

S1122: The PLMN SMF sends a fourth N2 message to the PLMN AMF, where the fourth N2 message includes the second DL address. The PLMN AMF forwards the address to the SNPN AMF.

S1123: The SNPN AMF processes a PDU session according to an HR/LBO method in the conventional technology.

In this embodiment of this application, interworking may be implemented between the UPF in the SNPN network and the UPF in the PLMN network, and a data transmission path is, for example, UE-PLMN RAN-PLMN UPF-SNPN UPF-DN.

In this embodiment of this application, when the UE is not located in the coverage of the SNPN but is located only in the coverage of the PLMN, the PLMN is used as the relay to forward a message between the SNPN and the UE, thereby implementing interworking between the UE and the SNPN.

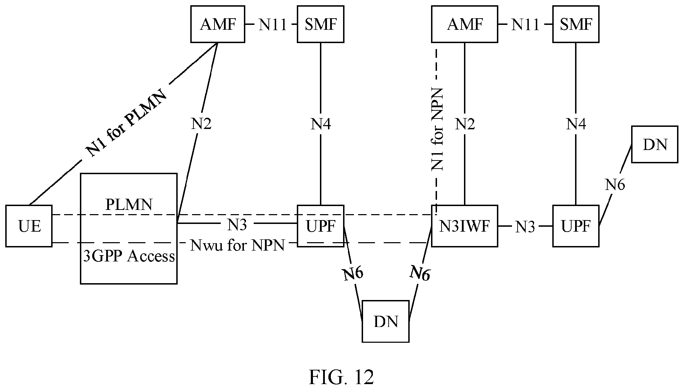

The conventional technology provides a method in which UE can access an SNPN by using a PLMN. Specifically, the UE normally registers with the PLMN network based on the conventional technology, and then accesses the SNPN by using an N3IWF architecture. FIG. 12 is a schematic diagram of a non-3GPP interworking function (non-3 GPP interworking function, N3IWF) architecture in a conventional technology. A method of accessing the SNPN by using the N3IWF architecture belongs to the conventional technology, and details are not described in this embodiment of this application.

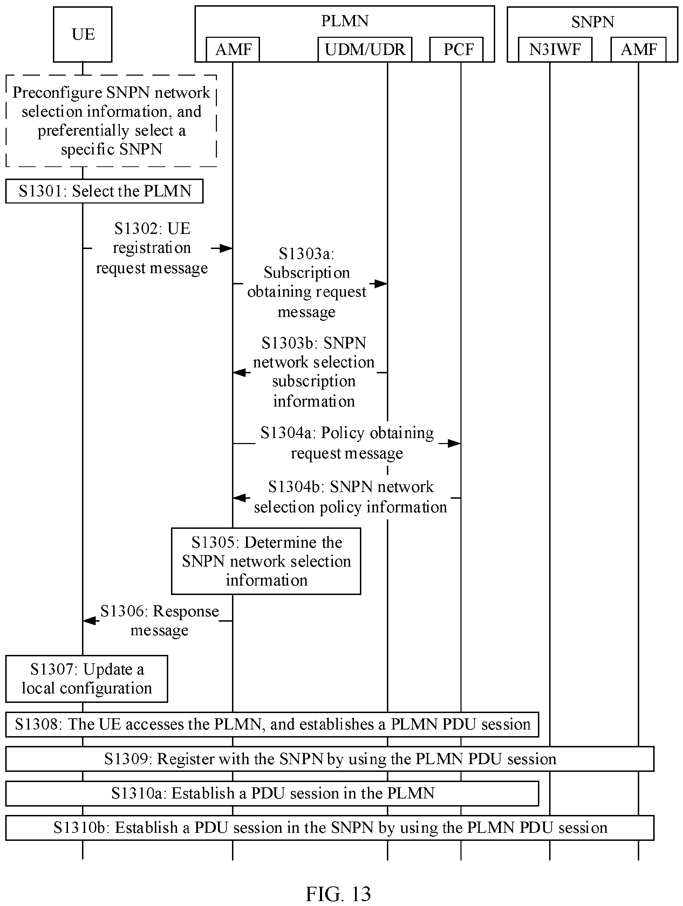

FIG. 13 is a schematic diagram of another network interaction procedure according to an embodiment of this application. This embodiment of this application is implemented based on the N3IWF architecture in FIG. 12. Specifically, S1301 to S1308 are similar to a process of obtaining the SNPN network selection information in the foregoing embodiment of this application. A difference lies in that the terminal device may further obtain a user equipment route selection policy including a user equipment route selection policy (user equipment route selection policy, URSP) information including a data network name (data network name, DNN) or single network slice selection assistance information (single network slice selection assistance information, S-NSSAI). The URSP information may be generated by the PCF based on the local configuration, and is carried in policy information to the first network device. The information may indicate the terminal device to establish a PDU session of a specific DNN/S-NSSAI in the PLMN or the SNPN.

S1308: The UE establishes, based on the URSP, a PLMN PDU session connected to the SNPN N3IWF. This step belongs to the conventional technology, and details are not described herein.

S1309: The UE registers with the SNPN by using the PLMN PDU session in S1309, and the SNPN further processes the registration of the UE in a roaming manner.

S1310a: The UE determines, based on the URSP information, the DNN/S-NSSAI directly used in the PLMN, and directly establishes a PDU session in the PLMN. Alternatively, S1310b: The UE determines, based on the URSP information, the DNN/S-NSSAI used in the SNPN, establishes a PDU session in the SNPN by using the PLMN PDU session established in S1309, and the SNPN further processes the PDU session of the UE in a roaming manner.

Optionally, in the three embodiments in FIG. 8, FIG. 11 A and FIG. 11 B, and FIG. 13, the SNPN network selection information may include an optional list (PLMN ID+NID/PLMN ID, Priority). A network priority Priority of the SNPN is higher than that of the PLMN. That is, in co-coverage, the UE preferentially selects the SNPN.

Optionally, in the three embodiments in FIG. 8, FIG. 11 A and FIG. 11 B, and FIG. 13, the UE may preconfigure the SNPN network selection information. The SNPN network selection information includes an optional list (PLMN ID+NID/PLMN ID, priority). A network priority priority of the SNPN is higher than that of the PLMN. That is, in co-coverage, the UE preferentially selects the SNPN. The UE may alternatively preconfigure onboarding network selection information. The onboarding network selection information can be used only when the UE has no valid subscription, and includes an onboarding network list (PLMN ID/PLMN ID+NID, priority) or (PLMN ID/PLMN ID+NID, priority, onboarding indication).

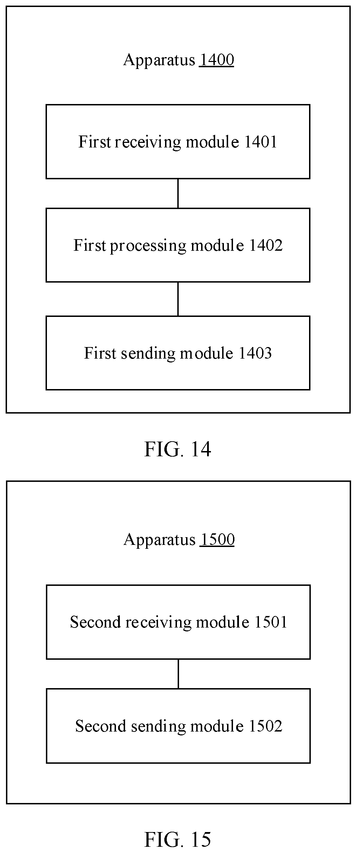

FIG. 14 is a schematic diagram of a communication apparatus according to an embodiment of this application. As shown in FIG. 14, the apparatus 1400 includes a first receiving module 1401, a first processing module 1402, and a first sending module 1403. The apparatus 1400 may be configured to implement a function of providing network selection information by the first network device in any one of the foregoing method embodiments. For example, the apparatus 1400 may be an AMF network element. The network element or network function may be a network element in a hardware device, may be a software function running on dedicated hardware, or may be a virtualized function instantiated on a platform (for example, a cloud platform).

The apparatus 1400 may be used as a first network device to process a message, and perform the step of processing, by the first network device, a request message of a terminal device or a PLMN network element in the foregoing method embodiments. The first receiving module 1401 and the first sending module 1403 may be configured to support the apparatus 1400 in performing communication, for example, performing a sending/receiving action performed by the first network device in FIG. 3 to FIG. 5. The processing module 1402 may be configured to support the apparatus 1400 in performing a processing action in the foregoing method, for example, performing a processing action performed by the first network device in FIG. 3 to FIG. 5. For details, refer to the following descriptions:

The first receiving module is configured to receive a first message, where the first message includes an identifier of a terminal device. The first processing module is configured to determine first network selection information, where the first network selection information includes at least one of information about a standalone non-public network SNPN that allows the terminal device to access and information about whether the terminal device is allowed to access a public land mobile network PLMN. The first sending module is configured to send a second message, where the second message includes the first network selection information.

Optionally, the processing module is specifically configured to determine the first network selection information based on at least one of subscription data, policy data, and a local configuration of the terminal device.

Optionally, the processing module is further configured to: if the subscription data and the policy data of the terminal device coexist, preferentially determine the first network selection information based on the policy data of the terminal device.

Optionally, the apparatus is an access and mobility management function network element AMF, and the first sending module is further configured to send a third message to a UDM. The third message is used to obtain the subscription data of the terminal device. The subscription data includes at least one of the information about the SNPN that allows the terminal device to access and the information about whether the terminal device is allowed to access a PLMN. The first receiving module is further configured to receive a fourth message sent by the unified data management network element UDM. The fourth message includes the subscription data of the terminal device.

Optionally, the first sending module is further configured to send a fifth message to a policy control function network element PCF. The fifth message is used to obtain the policy data of the terminal device. The policy data includes at least one of the information about the SNPN that allows the terminal device to access and the information about whether the terminal device is allowed to access a PLMN. The first receiving module is further configured to receive a sixth message sent by the PCF. The sixth message includes the policy data of the terminal device.

Optionally, the information about the SNPN that allows the terminal device to access includes an identifier of the SNPN that allows the terminal device to access.

Optionally, the information about the SNPN that allows the terminal device to access further includes first priority information, indicating a priority sequence of the SNPN that allows the terminal device to access.

Optionally, the information about whether the terminal device is allowed to access a PLMN includes an identifier of a PLMN that does not allow the terminal device to access and/or indication information indicating that the terminal device is not allowed to access a PLMN.

Optionally, the local configuration includes information indicating that the terminal device is not allowed to access a PLMN and/or information indicating that the terminal is capable of accessing only the SNPN.

Optionally, the processing module is further configured to mark the terminal device as being in a roaming state. A serving network of the terminal device is a PLMN, and a home network of the terminal device is an SNPN.

Optionally, the processing module is specifically configured to mark, based on the local configuration or the subscription data of the UE, the terminal device as being in the roaming state. The local configuration includes an identifier that is of a terminal device in a specific range and that is allocated to the SNPN for use, or first indication information that indicates the first network element to mark, when an identifier of the terminal device includes an identifier of a specific SNPN, the terminal device as being in the roaming state. The subscription data of the terminal device includes second indication information, and the second indication information indicates that if the terminal device performs access from a PLMN, the terminal device enters the roaming state, or the second indication information indicates that the home network of the terminal device is an SNPN.

Optionally, the first receiving module is further configured to receive a seventh message sent by the terminal device. The seventh message is used to request to establish a first protocol data unit PDU session of a data network name DNN/single network slice selection assistance information S-NSSAI. The processing module is further configured to establish the first PDU session in a non-roaming manner when the subscription of the terminal device indicates that the first PDU session is home routed HR roaming, or establish the first PDU session in an HR roaming manner when the subscription of the terminal device indicates that the first PDU session is local breakout LBO roaming.

Optionally, the information about whether the terminal device is allowed to access a PLMN includes an identifier of a PLMN that allows the terminal device to access and second priority information. The second priority information indicates a priority sequence of the PLMN that allows the terminal device to access, and a priority indicated by the second priority information is lower than a priority indicated by the first priority information.

Optionally, the apparatus belongs to an SNPN, the apparatus sends the second message to a third network device, and the third network device belongs to a PLMN.

FIG. 15 is a schematic diagram of another communication apparatus according to an embodiment of this application. As shown in FIG. 15, the apparatus 1500 includes a second receiving module 1501 and a second sending module 1502. The apparatus 1500 may be configured to implement a function of providing network selection information by the second network device in any one of the foregoing method embodiments. For example, the apparatus 1500 may be an AMF network element. The network element or network function may be a network element in a hardware device, may be a software function running on dedicated hardware, or may be a virtualized function instantiated on a platform (for example, a cloud platform).

The apparatus 1500 may be used as a second network device to process a message, and perform the step of processing, by the second network device, a request message of an SNPN network element in the foregoing method embodiments. The first receiving module 1501 and the first sending module 1502 may be configured to support the apparatus 1500 in performing communication, for example, performing a sending/receiving action performed by the second network device in FIG. 3 to FIG. 5. For details, refer to the following descriptions:

The second receiving module is configured to receive a first message, where the first message includes an identifier of a terminal device. The second sending module is configured to send a second message, where the second message includes at least one of information about a standalone non-public network SNPN that allows the terminal device to access and information about whether the terminal device is allowed to access a public land mobile network PLMN.

Optionally, the apparatus is a unified data management network element UDM, the second message is subscription data of the terminal device, and the subscription data includes at least one of the information about the SNPN that allows the terminal device to access and the information about whether the terminal device is allowed to access a PLMN.

Optionally, the apparatus is a policy control function network element PCF, the second message is policy data of the terminal device, and the policy data includes at least one of the information about the SNPN that allows the terminal device to access and the information about whether the terminal device is allowed to access a PLMN.

Optionally, the information about the SNPN that allows the terminal device to access includes at least one of the following information: indication information indicating that access from only the SNPN is allowed; an identifier of the SNPN that allows access; or first priority information, indicating a priority of the SNPN that allows access.

Optionally, the information about whether the terminal device is allowed to access a PLMN includes at least one of the following information: indication information indicating that access from a PLMN is not allowed; or an identifier of a PLMN that does not allow access.

Optionally, when the information about the SNPN that allows the terminal device to access includes an identifier of the SNPN that allows access and first priority information, the information about whether the terminal device is allowed to access a PLMN includes at least one of the following information: indication information indicating that access to a PLMN is allowed; an identifier of a PLMN that allows access; or second priority information, indicating a priority of the PLMN that allows access. The priority indicated by the second priority information is lower than a priority indicated by the first priority information.

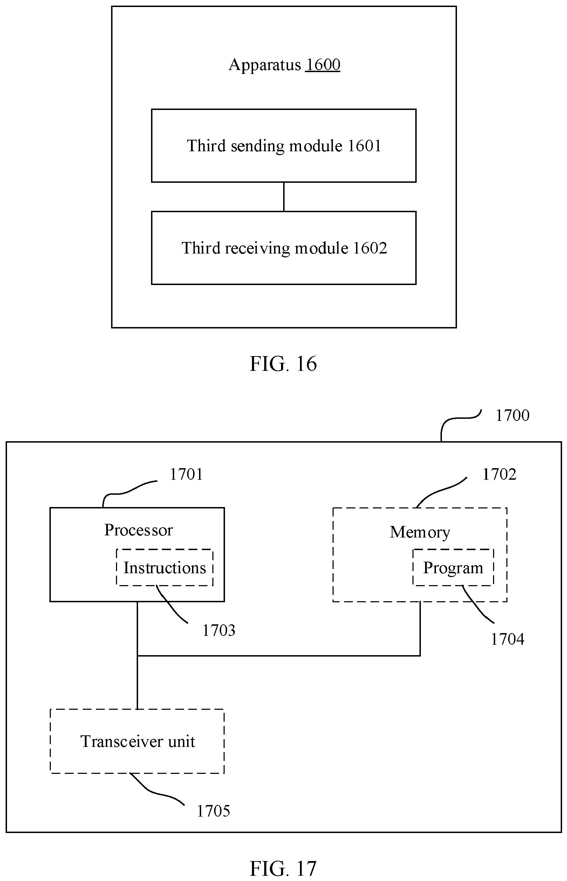

FIG. 16 is a schematic diagram of another communication apparatus according to an embodiment of this application. As shown in FIG. 16, the apparatus 1600 includes a third sending module 1601 and a third receiving module 1602. The apparatus 1600 may be configured to implement a function of obtaining SNPN network selection information by the terminal device in any one of the foregoing method embodiments. For example, the apparatus 1600 may be a terminal device.

The apparatus 1600 may be used as a terminal device to process a message, and perform the step of processing, by the terminal device, a network selection message fed back by an SNPN or a PLMN in the foregoing method embodiments. The third sending module 1601 and the third receiving module 1602 may be configured to support the apparatus 1600 in performing communication, for example, performing a sending/receiving action performed by the terminal device in FIG. 3 to FIG. 5. Optionally, the apparatus 1600 may further include a second processing module and a third processing module, configured to support the apparatus 1600 in performing a processing action in the foregoing method. For details, refer to the following descriptions:

The third sending module is configured to send a first message, where the first message includes an identifier of the apparatus. The third receiving module is configured to receive a second message, where the second message includes first network selection information, and the first network selection information includes at least one of information about a standalone non-public network SNPN that allows the apparatus to access and information about whether the apparatus is allowed to access a public land mobile network PLMN.

Optionally, the information about the SNPN that allows the apparatus to access includes an identifier of the SNPN that allows the apparatus to access.

Optionally, the information about the SNPN that allows the apparatus to access further includes first priority information, indicating a priority sequence of the SNPN that allows the apparatus to access.

Optionally, the information about whether the apparatus is allowed to access a PLMN includes an identifier of a PLMN that does not allow the apparatus to access and/or indication information indicating that the apparatus is not allowed to access a PLMN.

Optionally, the apparatus further includes a second processing module, configured to forbid a PLMN network selection function based on the first network selection information.

Optionally, the information about whether the apparatus is allowed to access a PLMN includes an identifier of a PLMN that allows the apparatus to access and second priority information. The second priority information indicates a priority sequence of the PLMN that allows the apparatus to access, and a priority of the second priority information is lower than a priority of the first priority information.

Optionally, the apparatus further includes a third processing module, configured to update a network selection configuration of the apparatus based on the first network selection information.

FIG. 17 is a schematic diagram of another structure of a communication apparatus according to an embodiment of this application. The communication apparatus 1700 may be configured to implement the method related to the first network device described in the foregoing method embodiments. The communication apparatus 1700 may be a chip or a network device.

The communication apparatus 1700 includes one or more processors 1701. The one or more processors 1701 may support the communication apparatus 1700 in implementing the communication methods in FIG. 3 to FIG. 5. The processor 1701 may be a general-purpose processor or a dedicated processor. For example, the processor 1701 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 1700 may further include a transceiver unit 1705, configured to input (receive) and output (send) a signal.

For example, the communication apparatus 1700 may be the chip, and the transceiver unit 1705 may be an input and/or output circuit of the chip. Alternatively, the transceiver unit 1705 may be a communication interface of the chip. The chip may be used as a component of the terminal device, the network device, or another wireless communication device.

The communication apparatus 1700 may include one or more memories 1702. The memory 1702 stores a program 1704. The program 1704 may be run by the processor 1701 to generate instructions 1703, to enable the processor 1701 to perform, according to the instructions 1703, the methods described in the foregoing method embodiments. Optionally, the memory 1702 may further store data. Optionally, the processor 1701 may further read the data stored in the memory 1702. The data and the program 1704 may be stored at a same storage address, or the data and the program 1704 may be stored at different storage addresses.

The processor 1701 and the memory 1702 may be disposed separately, or may be integrated together, for example, integrated on a board or integrated into a system on a chip (system on a chip, SoC).

The communication apparatus 1700 may further include the transceiver unit 1705. The transceiver unit 1705 may be referred to as a transceiver machine, a transceiver circuit, or a transceiver.

It should be understood that the steps in the foregoing method embodiments may be completed by using a logic circuit in a form of hardware or instructions in a form of software in the processor 1701. The processor 1701 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

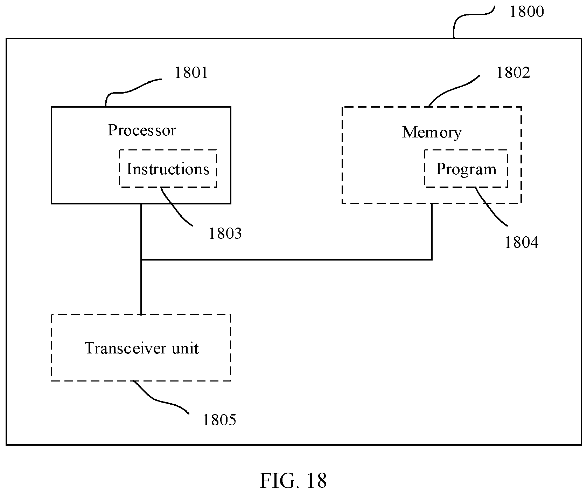

FIG. 18 is a schematic diagram of another structure of a communication apparatus according to an embodiment of this application. The communication apparatus 1800 may be configured to implement the method related to the first network device described in the foregoing method embodiments. The communication apparatus 1800 may be a chip or a network device.

The communication apparatus 1800 includes one or more processors 1801. The one or more processors 1801 may support the communication apparatus 1800 in implementing the communication methods in FIG. 3 to FIG. 5. The processor 1801 may be a general-purpose processor or a dedicated processor. For example, the processor 1801 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 1800 may further include a transceiver unit 1805, configured to input (receive) and output (send) a signal.

For example, the communication apparatus 1800 may be the chip, and the transceiver unit 1805 may be an input and/or output circuit of the chip. Alternatively, the transceiver unit 1805 may be a communication interface of the chip. The chip may be used as a component of the terminal device, the network device, or another wireless communication device.

The communication apparatus 1800 may include one or more memories 1802. The memory 1802 stores a program 1804. The program 1804 may be run by the processor 1801 to generate instructions 1803, to enable the processor 1801 to perform, according to the instructions 1803, the methods described in the foregoing method embodiments. Optionally, the memory 1802 may further store data. Optionally, the processor 1801 may further read the data stored in the memory 1802. The data and the program 1804 may be stored at a same storage address, or the data and the program 1804 may be stored at different storage addresses.

The processor 1801 and the memory 1802 may be separately disposed, or may be integrated together, for example, integrated on a single board or a system on a chip (system on a chip, SoC).

The communication apparatus 1800 may further include the transceiver unit 1805. The transceiver unit 1805 may be referred to as a transceiver machine, a transceiver circuit, or a transceiver.

It should be understood that the steps in the foregoing method embodiments may be completed by using a logic circuit in a form of hardware or instructions in a form of software in the processor 1801. The processor 1801 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

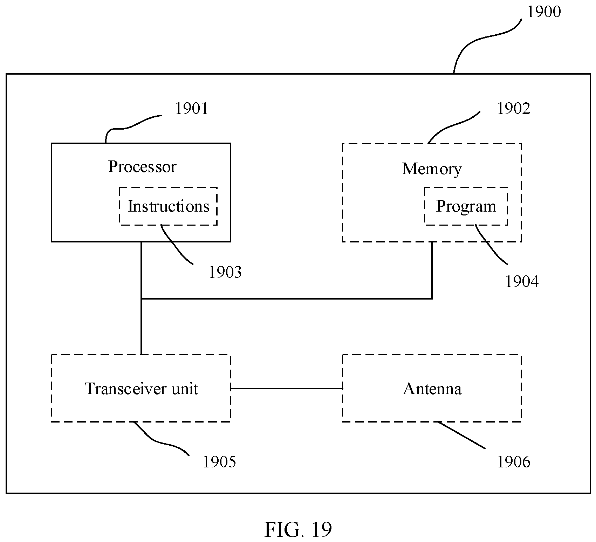

FIG. 19 is a schematic diagram of another structure of a communication apparatus according to an embodiment of this application. The communication apparatus 1900 may be configured to implement the method related to the first network device described in the foregoing method embodiments. The communication apparatus 1900 may be a chip or a network device.

The communication apparatus 1900 includes one or more processors 1901. The one or more processors 1901 may support the communication apparatus 1900 in implementing the communication methods in FIG. 3 to FIG. 5. The processor 1901 may be a general-purpose processor or a dedicated processor. For example, the processor 1901 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 1900 may further include a transceiver unit 1905, configured to input (receive) and output (send) a signal.

For example, the communication apparatus 1900 may be the chip, and the transceiver unit 1905 may be an input and/or output circuit of the chip. Alternatively, the transceiver unit 1905 may be a communication interface of the chip. The chip may be used as a component of the terminal device, the network device, or another wireless communication device.

The communication apparatus 1900 may include one or more memories 1902. The memory 1902 stores a program 1904. The program 1904 may be run by the processor 1901 to generate instructions 1903, to enable the processor 1901 to perform, according to the instructions 1903, the methods described in the foregoing method embodiments. Optionally, the memory 1902 may further store data. Optionally, the processor 1901 may further read the data stored in the memory 1902. The data and the program 1904 may be stored at a same storage address, or the data and the program 1904 may be stored at different storage addresses.

The processor 1901 and the memory 1902 may be separately disposed, or may be integrated together, for example, integrated on a single board or a system on a chip (system on a chip, SoC).

The communication apparatus 1900 may further include the transceiver unit 1905 and an antenna 1906. The transceiver unit 1905 may be referred to as a transceiver machine, a transceiver circuit, or a transceiver, and is configured to implement a transceiver function of the communication apparatus by using the antenna 1906.

It should be understood that the steps in the foregoing method embodiments may be completed by using a logic circuit in a form of hardware or instructions in a form of software in the processor 1901. The processor 1901 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

It should be understood that steps in the foregoing method embodiments may be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a first network slice selection network element, a second network slice selection network element, and an access management network element. Optionally, the communication system may further include a network repository function network element.

It should be understood that the processor mentioned in embodiments of this application may be a central processing unit (central processing unit, CPU), or the processor may be another general-purpose processor, a digital signal processor (digital signal processor, DSP), an application specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be understood that, on the premise that no conflict occurs, embodiments described in this application and/or technical features in embodiments may be randomly combined with each other, and technical solutions obtained after the combination shall also fall within the protection scope of this application.

In the several embodiments provided in this application, it should be understood that the disclosed apparatus and method may be implemented in other manners. For example, the foregoing described apparatus embodiments are merely examples. For example, the module division is merely logical function division and there may be other division in an actual implementation.

When a method provided by embodiments of this application is implemented in a form of a software functional unit and sold or used as an independent product, the method may be stored in a computer-readable storage medium. Based on such an understanding, the technical solutions of this application or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes at least any medium, for example, a USB flash drive, a removable hard disk, a read-only memory (read-only memory, ROM), a random access memory (random access memory, RAM), a magnetic disk, an optical disc, or the like that can store program code. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network device, a first message, wherein the first message comprises an identifier of a terminal device;
determining, by the first network device, first network selection information, wherein the first network selection information comprises at least one of information about a standalone non-public network SNPN that allows the terminal device to access and information about whether the terminal device is allowed to access a public land mobile network PLMN; and
sending, by the first network device, a second message, wherein the second message comprises the first network selection information.

2. The method according to claim 1, wherein the determining, by the first network device, first network selection information comprises:
determining, by the first network device, the first network selection information based on at least one of subscription data, policy data, and a local configuration of the terminal device.

3. The method according to claim 2, wherein the determining, by the first network device, the first network selection information based on at least one of subscription data, policy data, and a local configuration of the terminal device further comprises:
if the subscription data and the policy data of the terminal device coexist, preferentially determining, by the first network device, the first network selection information based on the policy data of the terminal device.

4. The method according to any one of claims 1 to 3, wherein the first network device is an access and mobility management function network element AMF, and before the determining, by the first network device, first network selection information, the method further comprises:
sending, by the first network device, a third message to a unified data management network element UDM, wherein the third message is used to obtain the subscription data of the terminal device, and the subscription data comprises at least one of the information about the SNPN that allows the terminal device to access and the information about whether the terminal device is allowed to access a PLMN; and
receiving, by the first network device, a fourth message sent by the UDM, wherein the fourth message comprises the subscription data of the terminal device.

5. The method according to any one of claims 1 to 4, wherein the first network device is an AMF, and before the determining, by the first network device, first network selection information, the method further comprises:
sending, by the first network device, a fifth message to a policy control function network element PCF, wherein the fifth message is used to obtain the policy data of the terminal device, and the policy data comprises at least one of the information about the SNPN that allows the terminal device to access and the information about whether the terminal device is allowed to access a PLMN; and
receiving, by the first network element, a sixth message sent by the PCF, wherein the sixth message comprises the policy data of the terminal device.

6. The method according to any one of claims 1 to 5, wherein the information about the SNPN that allows the terminal device to access comprises:
an identifier of the SNPN that allows the terminal device to access.

7. The method according to claim 6, wherein the information about the SNPN that allows the terminal device to access further comprises:
first priority information, indicating a priority sequence of the SNPN that allows the terminal device to access.

8. The method according to any one of claims 1 to 7, wherein the information about whether the terminal device is allowed to access a PLMN comprises:
an identifier of a PLMN that does not allow the terminal device to access and/or indication information indicating that the terminal device is not allowed to access a PLMN.

9. The method according to any one of claims 2 to 8, wherein the local configuration comprises information indicating that the terminal device is not allowed to access a PLMN and/or information indicating that the terminal is capable of accessing only the SNPN.

10. The method according to any one of claims 1 to 7, wherein before the determining, by the first network device, first network selection information, the method further comprises:
marking, by the first network element, the terminal device as being in a roaming state, wherein a serving network of the terminal device is a PLMN, and a home network of the terminal device is an SNPN.

11. The method according to claim 10, wherein the marking, by the first network element, the terminal device as being in a roaming state comprises:
marking, by the first network element based on the local configuration or the subscription data of the terminal device, the terminal device as being in the roaming state, wherein the local configuration comprises an identifier that is of a terminal device in a specific range and that is allocated to the SNPN for use, or first indication information that indicates the first network element to mark, when an identifier of the terminal device comprises an identifier of a specific SNPN, the terminal device as being in the roaming state, wherein
the subscription data of the terminal device comprises second indication information, and the second indication information indicates that if the terminal device performs access from a PLMN, the terminal device enters the roaming state, or the second indication information indicates that the home network of the terminal device is an SNPN.

12. The method according to claim 10 or 11, wherein the method further comprises:
receiving, by the first network device, a seventh message sent by the terminal device, wherein the seventh message is used to request to establish a first protocol data unit PDU session of a data network name DNN/single network slice selection assistance information S-NSSAI; and
establishing, by the first network element, the first PDU session in a non-roaming manner when the subscription of the terminal device indicates that the first PDU session is home routed HR roaming, or establishing the first PDU session in an HR roaming manner when the subscription of the terminal device indicates that the first PDU session is local breakout LBO roaming.

13. The method according to any one of claims 10 to 12, wherein the information about whether the terminal device is allowed to access a PLMN comprises:
an identifier of a PLMN that allows the terminal device to access and second priority information, wherein the second priority information indicates a priority sequence of the PLMN that allows the terminal device to access, and a priority indicated by the second priority information is lower than a priority indicated by the first priority information.

14. The method according to any one of claims 1 to 13, wherein the first network device belongs to an SNPN, the first network device sends the second message to a third network device, and the third network device belongs to a PLMN.

15. A communication method, comprising:
receiving, by a second network device, a first message, wherein the first message comprises an identifier of a terminal device; and
sending, by the second network device, a second message, wherein the second message comprises at least one of information about a standalone non-public network SNPN that allows the terminal device to access and information about whether the terminal device is allowed to access a public land mobile network PLMN.

16. The method according to claim 15, wherein the second network device is a unified data management network element UDM, the second message is subscription data of the terminal device, and the subscription data comprises at least one of the information about the SNPN that allows the terminal device to access and the information about whether the terminal device is allowed to access a PLMN.

17. The method according to claim 15, wherein the second network device is a policy control function network element PCF, the second message is policy data of the terminal device, and the policy data comprises at least one of the information about the SNPN that allows the terminal device to access and the information about whether the terminal device is allowed to access a PLMN.

18. The method according to claim 16 or 17, wherein the information about the SNPN that allows the terminal device to access comprises at least one of the following information:
indication information indicating that access from only the SNPN is allowed;
an identifier of the SNPN that allows access; or
first priority information, indicating a priority of the SNPN that allows access.

19. The method according to claim 16 or 17, wherein the information about whether the terminal device is allowed to access a PLMN comprises at least one of the following information:
indication information indicating that access from a PLMN is not allowed; or
an identifier of a PLMN that does not allow access.

20. The method according to claim 16 or 17, wherein when the information about the SNPN that allows the terminal device to access comprises an identifier of the SNPN that allows access and first priority information, the information about whether the terminal device is allowed to access a PLMN comprises at least one of the following information:
indication information indicating that access to a PLMN is allowed;
an identifier of a PLMN that allows access; or
second priority information, indicating a priority of the PLMN that allows access, wherein the priority indicated by the second priority information is lower than a priority indicated by the first priority information.

21. A communication method, comprising:
sending, by a terminal device, a first message, wherein the first message comprises an identifier of the terminal device; and
receiving, by the terminal device, a second message, wherein the second message comprises first network selection information, and the first network selection information comprises at least one of information about a standalone non-public network SNPN that allows the terminal device to access and information about whether the terminal device is allowed to access a public land mobile network PLMN.

22. The method according to claim 21, wherein the information about the SNPN that allows the terminal device to access comprises:
an identifier of the SNPN that allows the terminal device to access.

23. The method according to claim 22, wherein the information about the SNPN that allows the terminal device to access further comprises:
first priority information, indicating a priority sequence of the SNPN that allows the terminal device to access.

24. The method according to any one of claims 21 to 23, wherein the information about whether the terminal device is allowed to access a PLMN comprises:
an identifier of a PLMN that does not allow the terminal device to access and/or indication information indicating that the terminal device is not allowed to access a PLMN.

25. The method according to any one of claims 21 to 24, wherein the method further comprises:
forbidding, by the terminal device, a PLMN network selection function based on the first network selection information.

26. The method according to any one of claims 21 to 23, wherein the information about whether the terminal device is allowed to access a PLMN comprises:
an identifier of a PLMN that allows the terminal device to access and second priority information, wherein the second priority information indicates a priority sequence of the PLMN that allows the terminal device to access, and a priority of the second priority information is lower than a priority of the first priority information.

27. The method according to any one of claims 21 to 26, wherein the method further comprises:
updating, by the terminal device, a network selection configuration of the terminal device based on the first network selection information.

28. A communication apparatus, comprising:
a first receiving module, configured to receive a first message, wherein the first message comprises an identifier of a terminal device;
a first processing module, configured to determine first network selection information, wherein the first network selection information comprises at least one of information about a standalone non-public network SNPN that allows the terminal device to access and information about whether the terminal device is allowed to access a public land mobile network PLMN; and
a first sending module, configured to send a second message, wherein the second message comprises the first network selection information.

29. The apparatus according to claim 28, wherein the processing module is specifically configured to:
determine the first network selection information based on at least one of subscription data, policy data, and a local configuration of the terminal device.

30. The apparatus according to claim 29, wherein the processing module is further configured to:
if the subscription data and the policy data of the terminal device coexist, preferentially determine the first network selection information based on the policy data of the terminal device.

31. The apparatus according to any one of claims 28 to 30, wherein the apparatus is an access and mobility management function network element AMF, and the first sending module is further configured to:
send a third message to a unified data management network element UDM, wherein the third message is used to obtain the subscription data of the terminal device, and the subscription data comprises at least one of the information about the SNPN that allows the terminal device to access and the information about whether the terminal device is allowed to access a PLMN; and
the first receiving module is further configured to:
receive a fourth message sent by the UDM, wherein the fourth message comprises the subscription data of the terminal device.

32. The apparatus according to any one of claims 28 to 31, wherein the first sending module is further configured to:
send a fifth message to a policy control function network element PCF, wherein the fifth message is used to obtain the policy data of the terminal device, and the policy data comprises at least one of the information about the SNPN that allows the terminal device to access and the information about whether the terminal device is allowed to access a PLMN; and
the first receiving module is further configured to:
receive a sixth message sent by the PCF, wherein the sixth message comprises the policy data of the terminal device.

33. The apparatus according to any one of claims 28 to 32, wherein the information about the SNPN that allows the terminal device to access comprises:
an identifier of the SNPN that allows the terminal device to access.

34. The apparatus according to claim 33, wherein the information about the SNPN that allows the terminal device to access further comprises:
first priority information, indicating a priority sequence of the SNPN that allows the terminal device to access.

35. The apparatus according to any one of claims 28 to 34, wherein the information about whether the terminal device is allowed to access a PLMN comprises:
an identifier of a PLMN that does not allow the terminal device to access and/or indication information indicating that the terminal device is not allowed to access a PLMN.

36. The apparatus according to any one of claims 29 to 35, wherein the local configuration comprises information indicating that the terminal device is not allowed to access a PLMN and/or information indicating that the terminal is capable of accessing only the SNPN.

37. The apparatus according to any one of claims 28 to 34, wherein the processing module is further configured to:
mark the terminal device as being in a roaming state, wherein a serving network of the terminal device is a PLMN, and a home network of the terminal device is an SNPN.

38. The apparatus according to claim 37, wherein the processing module is specifically configured to:
mark, based on the local configuration or the subscription data of the terminal device, the terminal device as being in the roaming state, wherein the local configuration comprises an identifier that is of a terminal device in a specific range and that is allocated to the SNPN for use, or first indication information that indicates the first network element to mark, when an identifier of the terminal device comprises an identifier of a specific SNPN, the terminal device as being in the roaming state, wherein
the subscription data of the terminal device comprises second indication information, and the second indication information indicates that if the terminal device performs access from a PLMN, the terminal device enters the roaming state, or the second indication information indicates that the home network of the terminal device is an SNPN.

39. The apparatus according to claim 37 or 38, wherein the first receiving module is further configured to:
receive a seventh message sent by the terminal device, wherein the seventh message is used to request to establish a first protocol data unit PDU session of a data network name DNN/single network slice selection assistance information S-NSSAI; and
the processing module is further configured to:
establish the first PDU session in a non-roaming manner when the subscription of the terminal device indicates that the first PDU session is home routed HR roaming, or establish the first PDU session in an HR roaming manner when the subscription of the terminal device indicates that the first PDU session is local breakout LBO roaming.

40. The apparatus according to any one of claims 37 to 39, wherein the information about whether the terminal device is allowed to access a PLMN comprises:
an identifier of a PLMN that allows the terminal device to access and second priority information, wherein the second priority information indicates a priority sequence of the PLMN that allows the terminal device to access, and a priority indicated by the second priority information is lower than a priority indicated by the first priority information.

41. The apparatus according to any one of claims 28 to 40, wherein the apparatus belongs to an SNPN, the apparatus sends the second message to a third network device, and the third network device belongs to a PLMN.

42. A communication apparatus, comprising:
a second receiving module, configured to receive a first message, wherein the first message comprises an identifier of a terminal device; and
a second sending module, configured to send a second message, wherein the second message comprises at least one of information about a standalone non-public network SNPN that allows the terminal device to access and information about whether the terminal device is allowed to access a public land mobile network PLMN.

43. The apparatus according to claim 42, wherein the apparatus is a unified data management network element UDM, the second message is subscription data of the terminal device, and the subscription data comprises at least one of the information about the SNPN that allows the terminal device to access and the information about whether the terminal device is allowed to access a PLMN.

44. The apparatus according to claim 42, where the apparatus is a policy control function network element PCF, the second message is policy data of the terminal device, and the policy data comprises at least one of the information about the SNPN that allows the terminal device to access and the information about whether the terminal device is allowed to access a PLMN.

45. The apparatus according to claim 43 or 44, wherein the information about the SNPN that allows the terminal device to access comprises at least one of the following information:
indication information indicating that access from only the SNPN is allowed;
an identifier of the SNPN that allows access; or
first priority information, indicating a priority of the SNPN that allows access.

46. The apparatus according to claim 43 or 44, wherein the information about whether the terminal device is allowed to access a PLMN comprises at least one of the following information:
indication information indicating that access from a PLMN is not allowed; or
an identifier of a PLMN that does not allow access.

47. The apparatus according to claim 43 or 44, wherein when the information about the SNPN that allows the terminal device to access comprises an identifier of the SNPN that allows access and first priority information, the information about whether the terminal device is allowed to access a PLMN comprises at least one of the following information:
indication information indicating that access to a PLMN is allowed;
an identifier of the PLMN that allows access; or
second priority information, indicating a priority of the PLMN that allows access, wherein the priority indicated by the second priority information is lower than a priority indicated by the first priority information.

48. A communication apparatus, comprising:
a third sending module, configured to send a first message, wherein the first message comprises an identifier of the apparatus; and
a third receiving module, configured to receive a second message, wherein the second message comprises first network selection information, and the first network selection information comprises at least one of information about a standalone non-public network SNPN that allows the apparatus to access and information about whether the apparatus is allowed to access a public land mobile network PLMN.

49. The apparatus according to claim 48, wherein the information about the SNPN that allows the apparatus to access comprises:
an identifier of the SNPN that allows the apparatus to access.

50. The apparatus according to claim 49, wherein the information about the SNPN that allows the apparatus to access further comprises:
first priority information, indicating a priority sequence of the SNPN that allows the apparatus to access.

51. The apparatus according to any one of claims 48 to 50, wherein the information about whether the apparatus is allowed to access a PLMN comprises:
an identifier of a PLMN that does not allow the apparatus to access and/or indication information indicating that the apparatus is not allowed to access a PLMN.

52. The apparatus according to any one of claims 48 to 51, wherein the apparatus further comprises:
a second processing module, configured to forbid a PLMN network selection function based on the first network selection information.

53. The apparatus according to any one of claims 48 to 50, wherein the information about whether the apparatus is allowed to access a PLMN comprises:
an identifier of a PLMN that allows the apparatus to access and second priority information, wherein the second priority information indicates a priority sequence of the PLMN that allows the apparatus to access, and a priority of the second priority information is lower than a priority of the first priority information.

54. The apparatus according to any one of claims 48 to 53, wherein the apparatus further comprises:
a third processing module, configured to update a network selection configuration of the apparatus based on the first network selection information.
